(19) **Europäisches Patentamt / European Patent Office / Office européen des brevets**

(11) **EP 4 583 615 A1**

(12) **EUROPEAN PATENT APPLICATION**
published in accordance with Art. 153(4) EPC

(43) Date of publication:
09.07.2025 Bulletin 2025/28

(21) Application number: 23867361.0

(22) Date of filing: 13.09.2023

(51) International Patent Classification (IPC):
*H04W 72/40* (2023.01)

(52) Cooperative Patent Classification (CPC):
H04L 5/00; H04W 72/0446; H04W 72/20;
H04W 72/40; H04W 72/51

(86) International application number:
PCT/CN2023/118502

(87) International publication number:
WO 2024/061072 (28.03.2024 Gazette 2024/13)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 23.09.2022 CN 202211181920
14.11.2022 CN 202211419297

(71) Applicant: Huawei Technologies Co., Ltd.
Shenzhen, Guangdong 518129 (CN)

(72) Inventors:
• WANG, Bichai
Shenzhen, Guangdong 518129 (CN)
• LI, Xueru
Shenzhen, Guangdong 518129 (CN)

(74) Representative: Maiwald GmbH
Engineering
Elisenhof
Elisenstrasse 3
80335 München (DE)

(54) **COMMUNICATION METHOD AND APPARATUS**

(57) Embodiments of this application provide a communication method and apparatus, used in a sidelink communication system. The method includes: A first terminal device determines a first resource based on an obtained automatic gain control AGC processing capability of a second terminal device, and sends sidelink information to the second terminal device on the first resource. A slot structure is reconfigured based on the AGC processing capability of the second terminal device. This reduces system overheads and improves resource utilization, and can further improve flexibility of symbol configuration.

FIG. 5

## Description

This application claims priorities to Chinese Patent Application No. 202211181920.9, filed with the China National Intellectual Property Administration on September 23, 2022 and entitled "SIDELINK SLOT STRUCTURE AND COMMUNICATION METHOD", and to Chinese Patent Application No. 202211419297.6, filed with the China National Intellectual Property Administration on November 14, 2022 and entitled "COMMUNICATION METHOD AND APPARATUS", both of which are incorporated herein by reference in their entireties.

## TECHNICAL FIELD

This application relates to the communication field, and more specifically, to a communication method and apparatus.

## BACKGROUND

Currently, sidelink (sidelink, SL) communication can support direct communication between terminal devices. To be specific, user data is directly transmitted between terminal devices, so that user data does not need to be forwarded for transmission through a network in cellular communication, to reduce a transmission latency and alleviate network load.

For example, in 5th generation (5th generation, 5G) new radio (new radio, NR) SL communication, a slot is a minimum granularity for scheduling a time domain resource. Each slot includes 14 symbols, and includes at least one automatic gain control (automatic gain control, AGC) symbol and one guard period (guard period, GP) symbol. However, the current configuration of the AGC symbol and the GP symbol may cause excessively high system overheads, leading to an unnecessary waste of spectrum resources, a degradation of system transmission performance, or the like.

Therefore, how to design more effective symbol configuration is an urgent problem to be resolved.

## SUMMARY

This application provides a communication method and apparatus, to reduce system overheads, ensure flexibility of symbol configuration, and improve system transmission performance.

According to a first aspect, a communication method is provided. The method may be performed by a first terminal device (for example, a transmitting user equipment (user equipment, UE 1)), or may be performed by a chip or a circuit used for the first terminal device. This is not limited in this application. For ease of description, an example in which the method is performed by the first terminal device is used below for description.

The method includes: The first terminal device obtains first information, where the first information indicates an AGC processing capability of a second terminal device. The first terminal device determines a first resource based on the first information. The first terminal device sends sidelink information to the second terminal device on the first resource.

According to the solution provided in this application, the first terminal device can determine AGC processing time of the second terminal device based on the AGC processing capability of the second terminal device, and therefore can set an appropriate AGC resource and determine the first resource for transmitting the sidelink information. Compared with an existing symbol configuration structure, in this solution, for a second terminal device with short AGC processing time (a high capability), system overheads can be reduced, an unnecessary waste of spectrum resources is avoided, system transmission performance is improved, and so on, and compatibility with a second terminal device with a low capability is also maintained; and for a second terminal device with long AGC processing time (a low capability), a flexible symbol configuration structure can be provided to meet different transmission requirements, and so on.

With reference to the first aspect, in some implementations of the first aspect, that the first terminal device obtains first information includes: The first terminal device receives the first information from the second terminal device.

With reference to the first aspect, in some implementations of the first aspect, the first terminal device sends first indication information to the second terminal device, where the first indication information indicates a second resource on which the second terminal device is to perform AGC, and the second resource is determined based on the first information; or the first indication information indicates the first resource.

According to the foregoing solution, the first terminal device indicates the first resource or the second resource to the second terminal device, so that the second terminal device can quickly and effectively determine a resource occupied by the sidelink information, and then detect and obtain the sidelink information. This improves transmission performance.

With reference to the first aspect, in some implementations of the first aspect, the first indication information is carried in a physical sidelink control channel (physical sidelink control channel, PSCCH) or a physical sidelink shared channel (physical sidelink shared channel, PSSCH).

With reference to the first aspect, in some implementations of the first aspect, positions/a position of a time domain resource and/or a frequency domain resource used for mapping the PSCCH in each time unit is preconfigured, or positions/a position of a time domain resource and/or a frequency domain resource used for mapping the PSCCH in each time unit is configured by a network device. A start position of a time domain resource for the PSCCH is located in a $3^{rd}$ symbol in a time unit in which the PSCCH is located.

For example, the time unit in which the PSCCH is located may be a first time unit, or may be located before the first time unit. According to this implementation, the second terminal device can perform decoding and obtain the PSSCH in a timely manner. This improves transmission efficiency.

With reference to the first aspect, in some implementations of the first aspect, the first information includes a first value, a start position of a time domain resource of the first resource is located in a $2^{nd}$ symbol in the first time unit, and a time domain resource of the second resource used for the second terminal device to perform AGC is located in a second part of a $1^{st}$ symbol in the first time unit. Alternatively, the first information includes a second value, the start position of the time domain resource of the first resource is located in a $3^{rd}$ symbol in the first time unit, and the time domain resource of the second resource is located in the second part of the $1^{st}$ symbol in the first time unit and the $2^{nd}$ symbol in the first time unit. The $1^{st}$ symbol is located before the $2^{nd}$ symbol in time domain, and the $2^{nd}$ symbol is located before the $3^{rd}$ symbol in time domain.

According to the foregoing solution, different time unit structures are designed based on different AGC processing capabilities of second terminal devices. For a second terminal device with a high processing capability, resources occupied by AGC can be reduced, and resources available for data transmission can be increased, to improve resource utilization. For a second terminal device with a low processing capability, flexibility of symbol configuration can be improved.

With reference to the first aspect, in some implementations of the first aspect, the $1^{st}$ symbol in the first time unit includes a first part and the second part, the first part of the $1^{st}$ symbol is empty, and the first part of the $1^{st}$ symbol is located before the second part of the $1^{st}$ symbol in time domain.

With reference to the first aspect, in some implementations of the first aspect, the first terminal device receives first feedback information from the second terminal device on a third resource, where the first feedback information is carried in a physical sidelink feedback channel (physical sidelink feedback channel, PSFCH), the third resource is determined based on second information, and the second information indicates an AGC processing capability of the first terminal device.

With reference to the first aspect, in some implementations of the first aspect, the second information includes a first value, a time domain resource of the third resource is located in a second-to-last symbol in a second time unit and a last symbol in the second time unit, a time domain resource of a fourth resource is located in a second part of a third-to-last symbol in the second time unit. Alternatively, the second information includes a second value, the time domain resource of the third resource is located in the last symbol in the second time unit, and the time domain resource of the fourth resource is located in the second part of the third-to-last symbol in the second time unit and the second-to-last symbol in the second time unit. The fourth resource is used for the first terminal device to perform AGC. The third-to-last symbol in the second time unit includes a first part and the second part, the first part of the third-to-last symbol is empty, and the second time unit is the same as the first time unit, or the second time unit is located after the first time unit in time domain.

It should be noted that duration of first parts of all symbols may be the same or different. Similarly, duration of second parts of all symbols may be the same or different. This is not specifically limited in this application.

With reference to the first aspect, in some implementations of the first aspect, positions/a position of a time domain resource and/or a frequency domain resource used for mapping the PSCCH in each time unit is preconfigured, or positions/a position of a time domain resource and/or a frequency domain resource used for mapping the PSCCH in each time unit is configured by a network device. A start position of a time domain resource occupied by the PSCCH is located in a $2^{nd}$ symbol in a time unit in which the PSCCH is located.

With reference to the first aspect, in some implementations of the first aspect, the first information includes a first value, a start position of a time domain resource of the first resource is located in a second part of a $1^{st}$ symbol in the first time unit, and a time domain resource of the second resource used for the second terminal device to perform AGC is located in a first part of the $1^{st}$ symbol in the first time unit. Alternatively, the first information includes a second value, the start position of the time domain resource of the first resource is located in a $2^{nd}$ symbol in the first time unit, and the time domain resource of the second resource is located in the $1^{st}$ symbol in the first time unit. The $1^{st}$ symbol is located before the $2^{nd}$ symbol in time domain, and the first part of the $1^{st}$ symbol is located before the second part of the $1^{st}$ symbol in time domain.

With reference to the first aspect, in some implementations of the first aspect, an end position of the time domain resource of the first resource is located in a first part of a last symbol in a third time unit. The last symbol in the third time unit includes the first part and a second part, the second part of the last symbol is empty, and the third time unit is the same as the first time unit, or the third time unit is located after the first time unit in time domain.

With reference to the first aspect, in some implementations of the first aspect, the first terminal device receives first feedback information from the second terminal device on a third resource, where the first feedback information is carried in a PSFCH, the third resource is determined based on second information, and the second information indicates an AGC processing capability of the first terminal device.

With reference to the first aspect, in some implementations of the first aspect, an end position of the time domain resource of the first resource is located in a first part of a fourth-to-last symbol in a third time unit. The fourth-to-last symbol in the third time unit includes the first part and a second part, the second part of the fourth-to-last symbol is empty, and the third time unit is the same as the first time unit, or the third time unit is located after the first time unit in time domain.

With reference to the first aspect, in some implementations of the first aspect, a time domain resource of the third resource is located in a second-to-last symbol in a fourth time unit, a time domain resource of a fourth resource is located in a third-to-last symbol in the fourth time unit, and the fourth resource is used for the first terminal device to perform AGC. A last symbol in the fourth time unit is a gap symbol, and the fourth time unit is the same as the third time unit, or the fourth time unit is located after the third time unit in time domain.

With reference to the first aspect, in some implementations of the first aspect, the second information includes a first value, a time domain resource of the third resource is located in a second part of a third-to-last symbol in a fourth time unit, a second-to-last symbol in the fourth time unit, and a first part of a last symbol in the fourth time unit, and a time domain resource of a fourth resource is located in a first part of the third-to-last symbol in the fourth time unit. Alternatively, the second information includes a second value, the time domain resource of the third resource is located in the second-to-last symbol in the fourth time unit and the first part of the last symbol in the fourth time unit, and the time domain resource of the fourth resource is located in the third-to-last symbol in the fourth time unit. The fourth resource is used for the first terminal device to perform AGC. The last symbol in the fourth time unit includes the first part and a second part, the second part of the last symbol is empty, and the fourth time unit is the same as the third time unit, or the fourth time unit is located after the third time unit in time domain.

With reference to the first aspect, in some implementations of the first aspect, an end position of the time domain resource of the first resource is located in a fourth-to-last symbol in a third time unit, where the third time unit is the same as the first time unit, or the third time unit is located after the first time unit in time domain.

With reference to the first aspect, in some implementations of the first aspect, the second information includes a first value, a time domain resource of the third resource is located in a second-to-last symbol in a fourth time unit and a first part of a last symbol in the fourth time unit, a time domain resource of a fourth resource is located in a second part of a third-to-last symbol in the fourth time unit, and the fourth resource is used for the first terminal device to perform AGC. Alternatively, the second information includes a second value, the time domain resource of the third resource is located in a second part of the second-to-last symbol in the fourth time unit and the first part of the last symbol in the fourth time unit, and the time domain resource of the fourth resource is located in the second part of the third-to-last symbol in the fourth time unit and a first part of the second-to-last symbol in the fourth time unit. The third-to-last symbol in the fourth time unit includes the second part and a first part, and the last symbol in the fourth time unit includes the first part and a second part. The first part of the third-to-last symbol in the fourth time unit and the second part of the last symbol in the fourth time unit are empty. The fourth time unit is the same as the third time unit, or the fourth time unit is located after the third time unit in time domain.

With reference to the first aspect, in some implementations of the first aspect, the first terminal device receives second feedback information from the second terminal device on a fifth resource, where the second feedback information is used to feed back a receiving status of the sidelink information. The fifth resource is located in a first time subunit and a second time subunit in the fourth time unit, and a frequency domain position of the fifth resource in the first time subunit is different from a frequency domain position of the fifth resource in the second time subunit.

With reference to the first aspect, in some implementations of the first aspect, the first time subunit and the second time subunit in the fourth time unit are used to feed back a receiving status of data sent in L time units before the fourth time unit.

The frequency domain position of the fifth resource in the first time subunit satisfies:

$$[(i + j \cdot L) \cdot M_{set}, (i + 1 + j \cdot L) \cdot M_{set} - 1];$$

and the frequency domain position of the fifth resource in the second time subunit satisfies:

$$[(i + j \cdot L + Q) \bmod(N \cdot L) \cdot M_{set}, (i + 1 + j \cdot L + Q) \bmod(N \cdot L)) \cdot M_{set} - 1],$$

where

$M_{set}$ is a quantity of frequency domain subunits in a frequency domain subunit set in which the frequency domain position of the fifth resource in the first time subunit or the second time subunit is located, N is a quantity of frequency domain units in each of the L time units, i is an index, in the L time units, of a time unit in which the sidelink information is located, Q is a cyclic shift offset between a frequency domain subunit set in which the frequency domain position of the fifth resource in the first time subunit is located and a frequency domain subunit set in which the frequency domain position of the fifth resource in the second time subunit is located, Q is an integer greater than 0 and less than $N \cdot L$, j is an index, in the N frequency domain units, of a frequency domain unit in which the sidelink information is located, i is an integer greater than or equal to 0 and less than or equal to L-1, j is an integer greater than or equal to 0 and less than or equal to N-1, and L and N are positive integers.

According to the foregoing solution, for a UE with a high AGC processing capability, a mapping relationship between a PSSCH resource and a PSFCH resource is established, so that the second terminal device can transmit the second feedback information in a frequency hopping mode, to improve reliability of hybrid automatic repeat request (hybrid automatic repeat request, HARQ) feedback.

According to a second aspect, a communication method is provided. The method may be performed by a second terminal device (for example, a receiving UE 2), or may be performed by a chip or a circuit used for the second terminal device. This is not limited in this application. For ease of description, an example in which the method is performed by the second terminal device is used below for description.

The method includes: The second terminal device sends first information to a first terminal device, where the first information indicates an AGC processing capability of the second terminal device. The second terminal device receives sidelink information from the first terminal device on a first resource, where the first resource is determined based on the first information.

According to the solution provided in this application, the second terminal device sends the first information to the first terminal device, so that the first terminal device can determine AGC processing time of the second terminal device based on the AGC processing capability of the second terminal device, and therefore can set an appropriate AGC resource and determine the first resource for transmitting the sidelink information. Compared with an existing symbol configuration structure, in this solution, for a second terminal device with short AGC processing time (a high capability), system overheads can be reduced, an unnecessary waste of spectrum resources is avoided, system transmission performance is improved, and so on, and compatibility with a second terminal device with a low capability is also maintained; and for a second terminal device with long AGC processing time (a low capability), a flexible symbol configuration structure can be provided to meet different transmission requirements, and so on.

With reference to the second aspect, in some implementations of the second aspect, the second terminal device receives first indication information from the first terminal device, where the first indication information indicates a second resource on which the second terminal device is to perform AGC, and the second resource is determined based on the first information; or the first indication information indicates the first resource.

According to the foregoing solution, the first terminal device indicates the first resource or the second resource to the second terminal device, so that the second terminal device can quickly and effectively determine a resource occupied by the sidelink information, and then detect and obtain the sidelink information. This improves transmission performance.

With reference to the second aspect, in some implementations of the second aspect, the first indication information is carried in a PSCCH or a PSSCH.

With reference to the second aspect, in some implementations of the second aspect, positions/a position of a time domain resource and/or a frequency domain resource used for mapping the PSCCH in each time unit is preconfigured, or positions/a position of a time domain resource and/or a frequency domain resource used for mapping the PSCCH in each time unit is configured by a network device. A start position of a time domain resource for the PSCCH is located in a 3rd symbol in a time unit in which the PSCCH is located.

With reference to the second aspect, in some implementations of the second aspect, the first information includes a first value, a start position of a time domain resource of the first resource is located in a 2nd symbol in the first time unit, and a time domain resource of the second resource used for the second terminal device to perform AGC is located in a second part of a 1st symbol in the first time unit. Alternatively, the first information includes a second value, the start position of the time domain resource of the first resource is located in a 3rd symbol in the first time unit, and the time domain resource of the second resource is located in the second part of the 1st symbol in the first time unit and the 2nd symbol in the first time unit. The 1st symbol is located before the 2nd symbol in time domain, and the 2nd symbol is located before the 3rd symbol in time domain.

With reference to the second aspect, in some implementations of the second aspect, the 1st symbol in the first time unit includes a first part and the second part, the first part of the 1st symbol is empty, and the first part of the 1st symbol is located before the second part of the 1st symbol in time domain.

With reference to the second aspect, in some implementations of the second aspect, the second terminal device sends first feedback information to the first terminal device on a third resource, where the first feedback information is carried in a PSFCH, the third resource is determined based on second information, and the second information indicates an AGC processing capability of the first terminal device.

With reference to the second aspect, in some implementations of the second aspect, the second information includes a first value, a time domain resource of the third resource is located in a second-to-last symbol in a second time unit and a last symbol in the second time unit, a time domain resource of a fourth resource is located in a second part of a third-to-last symbol in the second time unit. Alternatively, the second information includes a second value, the time domain resource of the third resource is located in the last symbol in the second time unit, and the time domain resource of the fourth resource is located in the second part of the third-to-last symbol in the second time unit and the second-to-last symbol in the second time unit. The fourth resource is used for the first terminal device to perform AGC. The third-to-last symbol in the second time unit includes a first part and the second part, the first part of the third-to-last symbol is empty, and the second time unit is the same as the first time unit, or the second time unit is located after the first time unit in time domain.

With reference to the second aspect, in some implementations of the second aspect, positions/a position of a time domain resource and/or a frequency domain resource used for mapping the PSCCH in each time unit is preconfigured, or positions/a position of a time domain resource and/or a frequency domain resource used for mapping the PSCCH in each time unit is configured by a network device. A start position of a time domain resource occupied by the PSCCH is located in a $2^{nd}$ symbol in a time unit in which the PSCCH is located.

With reference to the second aspect, in some implementations of the second aspect, the first information includes a first value, a start position of a time domain resource of the first resource is located in a second part of a $1^{st}$ symbol in the first time unit, and a time domain resource of the second resource used for the second terminal device to perform AGC is located in a first part of the $1^{st}$ symbol in the first time unit. Alternatively, the first information includes a second value, the start position of the time domain resource of the first resource is located in a $2^{nd}$ symbol in the first time unit, and the time domain resource of the second resource is located in the $1^{st}$ symbol in the first time unit. The $1^{st}$ symbol is located before the $2^{nd}$ symbol in time domain, and the first part of the $1^{st}$ symbol is located before the second part of the $1^{st}$ symbol in time domain.

With reference to the second aspect, in some implementations of the second aspect, an end position of the time domain resource of the first resource is located in a first part of a last symbol in a third time unit. The last symbol in the third time unit includes the first part and a second part, the second part of the last symbol is empty, and the third time unit is the same as the first time unit, or the third time unit is located after the first time unit in time domain.

With reference to the second aspect, in some implementations of the second aspect, the second terminal device sends first feedback information to the first terminal device on a third resource, where the first feedback information is carried in a PSFCH, the third resource is determined based on second information, and the second information indicates an AGC processing capability of the first terminal device.

With reference to the second aspect, in some implementations of the second aspect, an end position of the time domain resource of the first resource is located in a first part of a fourth-to-last symbol in a third time unit. The fourth-to-last symbol in the third time unit includes the first part and a second part, the second part of the fourth-to-last symbol is empty, and the third time unit is the same as the first time unit, or the third time unit is located after the first time unit in time domain.

With reference to the second aspect, in some implementations of the second aspect, a time domain resource of the third resource is located in a second-to-last symbol in a fourth time unit, a time domain resource of a fourth resource is located in a third-to-last symbol in the fourth time unit, and the fourth resource is used for the first terminal device to perform AGC. A last symbol in the fourth time unit is a gap symbol, and the fourth time unit is the same as the third time unit, or the fourth time unit is located after the third time unit in time domain.

With reference to the second aspect, in some implementations of the second aspect, the second information includes a first value, a time domain resource of the third resource is located in a second part of a third-to-last symbol in a fourth time unit, a second-to-last symbol in the fourth time unit, and a first part of a last symbol in the fourth time unit, and a time domain resource of a fourth resource is located in a first part of the third-to-last symbol in the fourth time unit. Alternatively, the second information includes a second value, the time domain resource of the third resource is located in the second-to-last symbol in the fourth time unit and the first part of the last symbol in the fourth time unit, and the time domain resource of the fourth resource is located in the third-to-last symbol in the fourth time unit. The fourth resource is used for the first terminal device to perform AGC. The last symbol in the fourth time unit includes the first part and a second part, the second part of the last symbol is empty, and the fourth time unit is the same as the third time unit, or the fourth time unit is located after the third time unit in time domain.

With reference to the second aspect, in some implementations of the second aspect, an end position of the time domain resource of the first resource is located in a fourth-to-last symbol in a third time unit, where the third time unit is the same as the first time unit, or the third time unit is located after the first time unit in time domain.

With reference to the second aspect, in some implementations of the second aspect, the second information includes a first value, a time domain resource of the third resource is located in a second-to-last symbol in a fourth time unit and a first part of a last symbol in the fourth time unit, a time domain resource of a fourth resource is located in a second part of a third-to-last symbol in the fourth time unit, and the fourth resource is used for the first terminal device to perform AGC. Alternatively, the second information includes a second value, the time domain resource of the third resource is located in a second part of the second-to-last symbol in the fourth time unit and the first part of the last symbol in the fourth time unit, and the time domain resource of the fourth resource is located in the second part of the third-to-last symbol in the fourth time unit and a first part of the second-to-last symbol in the fourth time unit. The third-to-last symbol in the fourth time unit includes the second part and a first part, and the last symbol in the fourth time unit includes the first part and a second part. The first part of the third-to-last symbol in the fourth time unit and the second part of the last symbol in the fourth time unit are empty. The fourth time unit is the same as the third time unit, or the fourth time unit is located after the third time unit in time domain.

With reference to the second aspect, in some implementations of the second aspect, the second terminal device sends second feedback information to the first terminal device on a fifth resource, where the second feedback information is used to feed back a receiving status of the sidelink information. The fifth resource is located in a first time subunit and a second time subunit in the fourth time unit, and a frequency domain position of the fifth resource in the first time subunit is different from a frequency domain position of the fifth resource in the second time subunit.

With reference to the second aspect, in some implementations of the second aspect, the first time subunit and the second time subunit in the fourth time unit are used to feed back a receiving status of data sent in L time units before the fourth time unit.

The frequency domain position of the fifth resource in the first time subunit satisfies:

$$[(i + j \cdot L) \cdot M_{set}, (i + 1 + j \cdot L) \cdot M_{set} - 1];$$

and

the frequency domain position of the fifth resource in the second time subunit satisfies:

$$[(i + j \cdot L + Q) \bmod (N \cdot L) \cdot M_{set}, (i + 1 + j \cdot L + Q) \bmod (N \cdot L)) \cdot M_{set} - 1],$$

where

$M_{set}$ is a quantity of frequency domain subunits in a frequency domain subunit set in which the frequency domain position of the fifth resource in the first time subunit or the second time subunit is located, N is a quantity of frequency domain units in each of the L time units, i is an index, in the L time units, of a time unit in which the sidelink information is located, j is an index, in the N frequency domain units, of a frequency domain unit in which the sidelink information is located, Q is a cyclic shift offset between a frequency domain subunit set in which the frequency domain position of the fifth resource in the first time subunit is located and a frequency domain subunit set in which the frequency domain position of the fifth resource in the second time subunit is located, Q is an integer greater than 0 and less than $N \cdot L$, i is an integer greater than or equal to 0 and less than or equal to L-1, j is an integer greater than or equal to 0 and less than or equal to L-1, and L and N are positive integers.

According to the foregoing solution, for a UE with a high AGC processing capability, a mapping relationship between a PSSCH resource and a PSFCH resource is established, so that the second terminal device can transmit the second feedback information in a frequency hopping mode, to improve reliability of a HARQ feedback.

According to a third aspect, a communication method is provided. The method may be performed by a second terminal device, or may be performed by a chip or a circuit used for the second terminal device. This is not limited in this application. For ease of description, an example in which the method is performed by the second terminal device is used below for description.

The method includes: The second terminal device sends first feedback information to a first terminal device on a third resource, where the third resource is determined based on second information, and the second information indicates an AGC processing capability of the first terminal device.

With reference to the third aspect, in some implementations of the third aspect, the second information includes a first value, a time domain resource of the third resource is located in a second-to-last symbol in a second time unit and a last symbol in the second time unit, a time domain resource of a fourth resource is located in a second part of a third-to-last symbol in the second time unit. Alternatively, the second information includes a second value, the time domain resource of the third resource is located in the last symbol in the second time unit, and the time domain resource of the fourth resource is located in the second part of the third-to-last symbol in the second time unit and the second-to-last symbol in the second time unit. The fourth resource is used for the first terminal device to perform AGC. The third-to-last symbol in the second time unit includes a first part and the second part, the first part of the third-to-last symbol is empty, and the second time unit is the same as the first time unit, or the second time unit is located after the first time unit in time domain.

With reference to the third aspect, in some implementations of the third aspect, an end position of the time domain resource of the first resource is located in a first part of a fourth-to-last symbol in a third time unit. The fourth-to-last symbol in the third time unit includes the first part and a second part, the second part of the fourth-to-last symbol is empty, and the third time unit is the same as the first time unit, or the third time unit is located after the first time unit in time domain.

With reference to the third aspect, in some implementations of the third aspect, a time domain resource of the third resource is located in a second-to-last symbol in a fourth time unit, a time domain resource of a fourth resource is located in a third-to-last symbol in the fourth time unit, and the fourth resource is used for the first terminal device to perform AGC. A last symbol in the fourth time unit is a gap symbol, and the fourth time unit is the same as the third time unit, or the fourth time unit is located after the third time unit in time domain.

With reference to the third aspect, in some implementations of the third aspect, the second information includes a first value, a time domain resource of the third resource is located in a second part of a third-to-last symbol in a fourth time unit, a second-to-last symbol in the fourth time unit, and a first part of a last symbol in the fourth time unit, and a time domain resource of a fourth resource is located in a first part of the third-to-last symbol in the fourth time unit. Alternatively, the second information includes a second value, the time domain resource of the third resource is located in the second-to-last symbol in the fourth time unit and the first part of the last symbol in the fourth time unit, and the time domain resource of the fourth resource is located in the third-to-last symbol in the fourth time unit. The fourth resource is used for the first terminal device to perform AGC. The last symbol in the fourth time unit includes the first part and a second part, the second part of the last symbol is empty, and the fourth time unit is the same as the third time unit, or the fourth time unit is located after the third time unit in time domain.

With reference to the third aspect, in some implementations of the third aspect, an end position of the time domain resource of the first resource is located in a fourth-to-last symbol in a third time unit, where the third time unit is the same as the first time unit, or the third time unit is located after the first time unit in time domain.

With reference to the third aspect, in some implementations of the third aspect, the second information includes a first value, a time domain resource of the third resource is located in a second-to-last symbol in a fourth time unit and a first part of a last symbol in the fourth time unit, a time domain resource of a fourth resource is located in a second part of a third-to-last symbol in the fourth time unit, and the fourth resource is used for the first terminal device to perform AGC. Alternatively, the second information includes a second value, the time domain resource of the third resource is located in a second part of the second-to-last symbol in the fourth time unit and the first part of the last symbol in the fourth time unit, and the time domain resource of the fourth resource is located in the second part of the third-to-last symbol in the fourth time unit and a first part of the second-to-last symbol in the fourth time unit. The third-to-last symbol in the fourth time unit includes the second part and a first part, and the last symbol in the fourth time unit includes the first part and a second part. The first part of the third-to-last symbol in the fourth time unit and the second part of the last symbol in the fourth time unit are empty. The fourth time unit is the same as the third time unit, or the fourth time unit is located after the third time unit in time domain.

According to a fourth aspect, a communication apparatus is provided, including: a processing unit, configured to obtain first information, where the first information indicates an AGC processing capability of a second terminal device, and the processing unit is further configured to determine a first resource based on the first information; and a transceiver unit, configured to send sidelink information to the second terminal device on the first resource.

The transceiver unit may perform receiving and sending in the first aspect, and the processing unit may perform processing other than receiving and sending in the first aspect.

According to a fifth aspect, a communication apparatus is provided, including: a processing unit, configured to obtain first information, where the first information indicates an AGC processing capability of a second terminal device; and a transceiver unit, configured to send the first information to a first terminal device, where the first information indicates the AGC processing capability of the second terminal device. The transceiver unit is further configured to receive sidelink information from the first terminal device on a first resource, where the first resource is determined based on the first information.

The transceiver unit may perform receiving and sending in the second aspect, and the processing unit may perform processing other than receiving and sending in the second aspect.

According to a sixth aspect, a communication apparatus is provided, including: a processing unit, configured to obtain second information for a second terminal device, where the second information indicates an AGC processing capability of a first terminal device, and the processing unit is further configured to determine a third resource based on the second information; and a transceiver unit, configured to send first feedback information to the first terminal device on the third resource.

The transceiver unit may perform receiving and sending in the third aspect, and the processing unit may perform processing other than receiving and sending in the third aspect.

According to a seventh aspect, a communication apparatus is provided, including a transceiver, a processor, and a memory. The processor is configured to control the transceiver to send and receive a signal. The memory is configured to store a computer program. The processor is configured to invoke the computer program from the memory and run the computer program, so that the communication apparatus performs the method according to any one of the first aspect to the third aspect or the possible implementations of the first aspect to the third aspect.

Optionally, there are one or more processors, and there are one or more memories.

Optionally, the memory may be integrated with the processor, or the memory and the processor are separately disposed.

Optionally, the communication apparatus further includes a transmitter (transmitter device) and a receiver (receiver device).

According to an eighth aspect, a communication system is provided, including a network device, a first terminal device, and at least one second terminal device.

According to a ninth aspect, a computer-readable storage medium is provided. The computer-readable storage medium stores a computer program or code. When the computer program or code is run on a computer, the computer is enabled to perform the method according to any one of the first aspect to the third aspect or the possible implementations of the first aspect to the third aspect.

According to a tenth aspect, a chip is provided, including at least one processor. The at least one processor is coupled to a memory. The memory is configured to store a computer program. The processor is configured to invoke the computer program from the memory and run the computer program, so that an apparatus on which the chip system is installed performs the method according to any one of the possible implementations of the first aspect to the third aspect.

The chip may include an input circuit or interface for sending information or data and an output circuit or interface for receiving information or data.

According to an eleventh aspect, a computer program product is provided. The computer program product includes computer program code. When the computer program code is run on an apparatus, the apparatus is enabled to perform the method according to any one of the possible implementations of the first aspect to the third aspect.

## BRIEF DESCRIPTION OF DRAWINGS

FIG. 1 and FIG. 2 are diagrams of a wireless communication system to which embodiments of this application are applicable;
FIG. 3 is a diagram of an SL slot structure;
FIG. 4 is a diagram of an SL mini-slot structure;
FIG. 5 is a schematic flowchart of a communication method 500 according to an embodiment of this application;
FIG. 6 is a diagram of an SL slot structure according to an embodiment of this application;
FIG. 7 is a diagram of SL slot structures for different AGC processing capabilities according to an embodiment of this application;
FIG. 8 is a diagram of an SL slot structure without a PSFCH resource according to an embodiment of this application;
FIG. 9 is a diagram of an SL slot structure with a PSFCH resource according to an embodiment of this application;
FIG. 10 is a diagram of a mapping relationship between a PSFCH resource and a PSSCH resource according to an embodiment of this application;
FIG. 11 is a diagram of a structure of a communication apparatus 1000 according to an embodiment of this application;
FIG. 12 is a diagram of a structure of a communication apparatus 2000 according to an embodiment of this application; and
FIG. 13 is a diagram of a structure of a chip system 3000 according to an embodiment of this application.

## DESCRIPTION OF EMBODIMENTS

The following describes technical solutions in embodiments of this application with reference to accompanying drawings.

The technical solutions provided in this application may be used in various communication systems, for example, a 5G or NR system, a long term evolution (long term evolution, LTE) system, an LTE frequency division duplex (frequency division duplex, FDD) system, and an LTE time division duplex (time division duplex, TDD) system. The technical solutions provided in this application may be further used in a future communication system, for example, a 6th generation (6th generation, 6G) mobile communication system. The technical solutions provided in this application may be further used in device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system.

In an example, the V2X communication may include vehicle-to-vehicle (vehicle-to-vehicle, V2V) communication, vehicle-to-infrastructure (vehicle-to-infrastructure, V2I) communication, vehicle-to-pedestrian (vehicle-to-pedestrian, V2P) communication, and vehicle-to-network (vehicle-to-network, V2N) communication. The V2V indicates communication between vehicles. The V2P indicates communication between a vehicle and a person (including a pedestrian, a bicycle rider, a driver, a passenger, or the like). The V2I indicates communication between a vehicle and infrastructure. The infrastructure is, for example, a roadside unit (roadside unit, RSU) or a network device. The RSU includes two types: a terminal-type RSU and a base station-type RSU. Because the terminal-type RSU is deployed on a road side, the terminal-type RSU is in a non-mobile state, and mobility does not need to be considered. The base station-type RSU can provide timing synchronization and resource scheduling for a vehicle that communicates with the base station-type RSU. The V2N indicates communication between a vehicle and a network device. It can be understood that the foregoing descriptions are examples, and embodiments of this application are not limited thereto. For example, the V2X may further include NR system-based V2X communication in current Rel-16 and later releases of the 3GPP.

A terminal device in embodiments of this application may also be referred to as a user equipment (user equipment, UE), an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides voice or data for a user, for example, a handheld device or a vehicle-mounted device with a wireless connection function. Currently, some examples of the terminal are a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a hand-held device with a wireless communication function, a computing device or another processing device connected to a wireless modem, a wearable device, a terminal device in a 5G network, or a terminal device in a future evolved public land mobile network (public land mobile network, PLMN). This is not limited in embodiments of this application.

As an example rather than a limitation, in embodiments of this application, the terminal device may alternatively be a wearable device. The wearable device may also be referred to as a wearable intelligent device, and is a general term for wearable devices, such as glasses, gloves, watches, clothes, and shoes, that are developed by applying wearable technologies to intelligent designs of daily wear. The wearable device is a portable device that is directly worn on a body or integrated into clothes or an accessory of a user. The wearable device is not merely a hardware device, but further implements a powerful function through software support, data exchange, and cloud-based interaction. In a broad sense, wearable intelligent devices include full-featured and large-sized devices that can implement complete or partial functions without relying on smartphones, for example, smartwatches or smart glasses, and devices that focus only on one type of application function and need to be used together with other devices such as smartphones, for example, various smart bands or smart jewelry used for monitoring physical signs.

In embodiments of this application, an apparatus, namely, a terminal device, for implementing a function of a terminal device may be a terminal device, or may be an apparatus, for example, a chip system or a chip, that can enable a terminal device to implement the function, where the apparatus may be installed in the terminal device. In embodiments of this application, the chip system may include a chip, or may include a chip and another discrete component.

A network device in embodiments of this application may be a device configured to communicate with the terminal device. The network device may also be referred to as an access network device or a radio access network device. For example, the network device may be a base station. The network device in embodiments of this application may be a radio access network (radio access network, RAN) node (or device) that connects the terminal device to a wireless network. The base station may cover any of the following names in a broad sense, or may be replaced with the following names: for example, a NodeB (NodeB), an evolved NodeB (evolved NodeB, eNB), a next generation NodeB (next generation NodeB, gNB), a relay station, an access point, a transmitting and receiving point (transmitting and receiving point, TRP), a transmitting point (transmitting point, TP), a master station, a secondary station, a multi-standard radio (motor slide retainer, MSR) node, a home base station, a network controller, an access node, a radio node, an access point (access point, AP), a transmission node, a transceiver node, a baseband unit (baseband unit, BBU), a remote radio unit (remote radio unit, RRU), an active antenna unit (active antenna unit, AAU), a remote radio head (remote radio head, RRH), a central unit (central unit, CU), a distributed unit (distributed unit, DU), and a positioning node. The base station may be a macro base station, a micro base station, a relay node, a donor node, or the like, or a combination thereof. The base station may alternatively be a communication module, a modem, or a chip that is disposed in the foregoing device or apparatus. The base station may alternatively be a mobile switching center, a device that performs a function of a base station in D2D, V2X, or M2M communication, a network-side device in a 6G network, a device that performs a function of a base station in a future communication system, or the like. The base station may support networks of a same access technology or different access technologies. A specific technology and a specific device form that are used by the network device are not limited in embodiments of this application.

The base station may be fixed or mobile. For example, a helicopter or an uncrewed aerial vehicle may be configured as a mobile base station, and one or more cells may move based on a position of the mobile base station. In other examples, a helicopter or an uncrewed aerial vehicle may be configured as a device for communicating with another base station.

In some deployments, the network device mentioned in embodiments of this application may be a device including a CU or a DU, a device including a CU and a DU, or a device including a control plane CU node (a central unit-control plane (central unit-control plane, CU-CP)), a user plane CU node (a central unit-user plane (central unit-user plane, CU-UP)), and a DU node.

In embodiments of this application, an apparatus for implementing a function of a network device may be a network device, or may be an apparatus, for example, a chip system or a chip, that can enable a network device to implement the function, where the apparatus may be installed in the network device. In embodiments of this application, the chip system may include a chip, or may include a chip and another discrete component.

The network device and the terminal device may be deployed on land, including an indoor or outdoor scenario and a handheld or vehicle-mounted scenario, or may be deployed on water, or may be deployed on an airplane, a balloon, and a satellite in the air. Scenarios in which the network device and the terminal device are located are not limited in embodiments of this application.

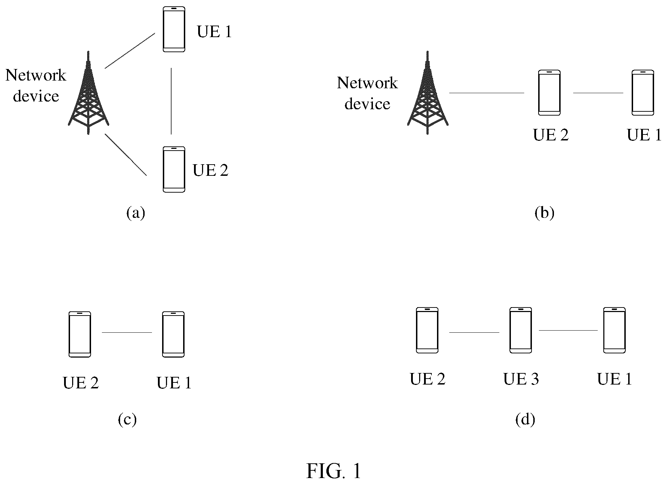

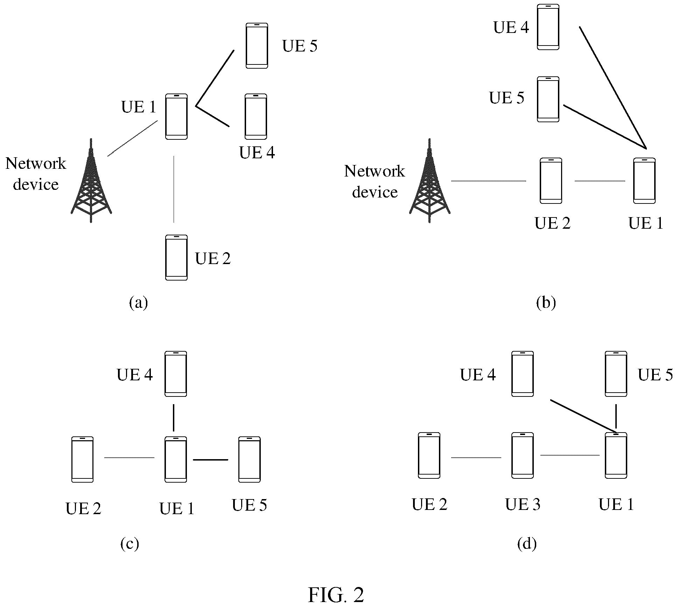

With reference to FIG. 1 and FIG. 2, the following briefly describes a communication system to which embodiments of this application are applicable.

FIG. 1 and FIG. 2 are diagrams of a wireless communication system to which embodiments of this application are applicable. As shown in FIG. 1 and FIG. 2, the wireless communication system may include at least one terminal device, for example, a UE 1, a UE 2, a UE 3, a UE 4, and a UE 5 shown in the figure. Optionally, the wireless communication system may further include at least one network device, for example, a network device shown in the figure.

The network device and the terminal device may communicate with each other. For example, the network device and the terminal device may communicate with each other through a Uu interface, and a link (link) for communication between the network device and the terminal device may be denoted as a Uu link. As shown in (a) in FIG. 1 or (a) in FIG. 2, the network device and the UE 1 may directly communicate with each other. As shown in (b) in FIG. 1 or (b) in FIG. 2, the network device and the UE 1 may alternatively communicate with each other through the UE 2. Similarly, the network device and the UE 2 may directly communicate with each other, or the network device and the UE 2 may communicate with each other through the UE 1. It can be understood that the Uu link represents a connection relationship between the terminal device and the network device, and is a logical concept rather than a physical entity. A primary link is merely named for differentiation, and a specific name of the primary link does not limit the protection scope of this application.

Terminal devices may also communicate with each other. For example, terminal devices may directly communicate with each other. As shown in (a) in FIG. 1 to (c) in FIG. 1 and (a) in FIG. 2 to (c) in FIG. 2, the UE 1 and the UE 2 may directly communicate with each other. For another example, terminal devices may communicate with each other through another device, for example, the network device or a terminal device. As shown in (a) in FIG. 1, the UE 1 and the UE 2 may communicate with each other through the network device. As shown in (d) in FIG. 1 and (d) in FIG. 2, the UE 1 and the UE 2 may communicate with each other through the UE 3. An interface for communication between terminal devices may be denoted as a proximity-based services communication 5 (proximity-based services communication 5, PC5) interface. A link for communication between terminal devices may be denoted as a sidelink SL, and communication between terminal devices may also be denoted as SL communication. The sidelink may also be referred to as a side-link, a secondary link, or the like. It can be understood that the sidelink represents a connection relationship between terminal devices, and is a logical concept rather than a physical entity. The sidelink is merely named for differentiation, and a specific name of the sidelink does not limit the protection scope of this application.

Unicast communication may be performed between devices. For example, unicast communication may be performed between terminal devices. Unicast means that one transmitting terminal and one receiving terminal form a unicast connection pair. For example, FIG. 1 is used as an example. Unicast communication may be performed between the UE 1 and the UE 2.

Multicast communication may be performed between devices. For example, multicast communication may be performed between terminal devices. Multicast means that one transmitting terminal and at least one receiving terminal form a multicast connection pair. For example, FIG. 2 is used as an example. Multicast communication may be performed between the UE 1 and the UE 2, the UE 4, and the UE 5. As shown in (a) in FIG. 2, the network device and the UE 1 may directly communicate with each other, and multicast communication may be performed between one UE 1 and a plurality of UEs, for example, the UE 2, the UE 4, and the UE 5. Multicast communication between the UE 1 and a plurality of UEs may be performed under network coverage, as shown in (a) in FIG. 2 or (b) in FIG. 2, or may be performed without network coverage, as shown in (c) in FIG. 2 or (d) in FIG. 2. It can be understood that, in FIG. 2, an example in which multicast communication is performed between the UE 1 and three UEs is used for description. This is not limited. For example, multicast communication may be performed between the UE 1 and more UEs.

In an example, SL communication between terminal devices may be used in an internet of vehicles or an intelligent transportation system (intelligent transportation system, ITS), for example, the V2X communication described above.

Optionally, SL communication between terminal devices may be performed under network coverage or without network coverage. As shown in (a) in FIG. 1, (b) in FIG. 1, (a) in FIG. 2, and (b) in FIG. 2, the UE 1 and another UE may communicate with each other under network coverage. Alternatively, as shown in (c) in FIG. 1, (d) in FIG. 1, (c) in FIG. 2, and (d) in FIG. 2, the UE 1 and another UE may communicate with each other out of a network coverage area (out-of-coverage).

Optionally, configuration information used during SL communication between terminal devices, for example, a time-frequency resource used during SL communication between terminal devices, may be configured or scheduled by the network device, or may be autonomously selected by the terminal devices. This is not limited.

It can be understood that FIG. 1 and FIG. 2 are merely simplified diagrams of an example for ease of understanding. The wireless communication system may further include another network device or another terminal device. This is not shown in FIG. 1 or FIG. 2. Embodiments of this application are applicable to any communication scenario in which a transmit-end device communicates with a receive-end device.

It should be noted that a specific structure of an entity for performing a method provided in embodiments of this application is not particularly limited in embodiments of this application, provided that the entity can run a program that records code for the method provided in embodiments of this application to perform communication according to the method provided in embodiments of this application. For example, the method provided in embodiments of this application may be performed by a terminal device or a functional module that is in a terminal device and that can invoke the program and execute the program.

For ease of understanding embodiments of this application, terms or technologies in this application are briefly described first.

1. Licensed spectrum and unlicensed spectrum

Spectra used in a wireless communication system are classified into two types: a licensed spectrum (licensed spectrum) and an unlicensed spectrum (unlicensed spectrum). In the licensed spectrum, a UE may use a spectrum resource based on scheduling by a network device. In the unlicensed spectrum, a communication device may use a spectrum resource through contention. SL communication on the unlicensed spectrum may be referred to as a sidelink on the unlicensed spectrum (sidelink unlicensed, SL-U). NR cellular communication on the unlicensed spectrum may be referred to as NR-U.

The SL-U mainly means performing SL transmission on the unlicensed spectrum (unlicensed band). For the unlicensed spectrum, two access mechanisms, including a type 1 and a type 2, are introduced in a standard. The type 1 is used in a scenario in which a channel is preempted, and listen-before-talk (listen-before-talk, LBT) needs to be performed, to be specific, listening needs to be performed before transmission. The listening herein may be energy detection. To be specific, energy is detected at 9 $\mu$s. If energy exceeds the threshold, it indicates that a UE has occupied the resource. Otherwise, if energy does not exceed the threshold, it indicates that no UE has occupied the resource. The type 2 is used to share a transmission resource preempted by another UE in the type 1 manner. For example, a UE 1 preempts a transmission occasion (namely, channel occupancy time (channel occupancy time, COT)) within a period of time in the type 1 manner, and may indicate another UE to access, in the type 2 manner, a remaining transmission occasion, other than transmission time occupied by the UE 1, in the COT occupied by the UE 1. Further, the type 2 includes a type 2A and a type 2B. In the type 2A, a channel is to be occupied when 25 $\mu$s elapses after transmission of another UE ends. To be specific, a channel may be occupied if it is found, by sensing the channel, that no other UE uses the channel within 25 $\mu$s. In the type 2B, a channel is to be occupied when 16 $\mu$s elapses after transmission of another UE ends. A difference from the type 2A lies in 9 $\mu$s, to be specific, duration of a sensing slot.

For the unlicensed spectrum, a UE needs to perform LBT on each 20-MHz channel before transmission, and the 20-MHz channel may be referred to as an LBT channel. To avoid interference between different channels, the UE cannot send data on the entire 20-MHz bandwidth, but reserves a part of frequency band resources as a guard band (guard band), and sends data only on a remaining part of frequency domain resources. This part of available resources is referred to as a resource block set (resource block set, RB set). When the UE performs LBT operations on a plurality of consecutive 20-MHz channels and successfully accesses a channel, a guard band between two RB sets may be used to transmit data, to improve resource utilization.

2. SL resource pool (resource pool)

In NR, SL transmission is performed based on a resource pool. Each resource pool includes one or more subchannels (subchannel). Frequency domain resources (namely, quantities of physical resource blocks (physical resource block, PRB)) occupied by subchannels in one resource pool are the same, and frequency domain resources occupied by subchannels in different resource pools may be different.

It should be understood that the resource pool is a logical concept. One resource pool includes a plurality of physical resources, and any one of the physical resources is used for data transmission. Each UE needs to select a resource from the resource pool during data transmission. The resource selection process includes the following two cases:

(1) The UE is controlled by a network device, and selects a resource from the resource pool based on indication information of the network device to perform data transmission. This is also referred to as a mode 1.
(2) The UE autonomously selects a resource from the resource pool to perform data transmission. This is also referred to as a mode 2. To be specific, the UE has an opportunity to autonomously determine resource selection and resource allocation. The UE may sense an occupancy status of a spectrum, exclude some occupied resources or resources with high interference, and select a transmission resource from an idle resource or a resource with low interference.

### 3. Resource

A resource is a time-frequency resource in a resource pool. Data or information may be carried in a time-frequency resource.

In time domain, the time-frequency resource may include one or more time domain units (which may also be referred to as time units). A time domain unit may be a symbol (symbol), a mini-slot (mini-slot), a slot (slot), a partial slot (partial slot), a subframe (subframe), a radio frame (frame), or the like. The symbol is short for a time domain symbol, and may also be referred to as an orthogonal frequency division multiplexing (orthogonal frequency division multiplexing, OFDM) symbol. It should be noted that the time domain symbol may alternatively be named in combination with another multiplexing mode. This is not limited in embodiments of this application. For different subcarrier spacings, a length of the time domain symbol may vary.

In frequency domain, the time-frequency resource may include one or more frequency domain units. A frequency domain unit may be a resource element (resource element, RE), a resource block (resource block, RB), a subchannel (subchannel), a subband (subband), a resource pool (resource pool), a bandwidth (bandwidth), a bandwidth part (bandwidth part, BWP), a carrier (carrier), a channel (channel), an interlaced (interlace) RB, or the like.

It should be understood that a scheduling granularity for a PSCCH or a PSSCH is measured in a unit of one slot in time domain, and is measured in a unit of one or more subchannels in frequency domain. A transmitting terminal device may send sidelink information on the resource. A resource may carry three types of channels, namely, a PSCCH, a PSSCH, and a PSFCH, and signals such as a demodulation reference signal (demodulation reference signal, DM-RS) and a channel state information reference signal (channel state information reference signal, CSI-RS). The PSCCH carries first-order sidelink control information (sidelink control information, SCI). The PSSCH carries second-order SCI and/or data. The PSFCH carries feedback information. A PSCCH/PSSCH includes a PSCCH and/or a PSSCH.

### 4. Gap symbol (or GP symbol) and AGC symbol

A symbol used for receive/transmit or transmit/receive transition may be referred to as a gap symbol (GAP symbol). In a gap symbol, a communication device usually performs neither transmission nor reception. A terminal device may respectively receive and send a PSSCH in two consecutive slots, or the terminal device may respectively receive and send a PSSCH and a PSFCH in one slot. Therefore, after the PSSCH is received and the PSFCH is sent, an additional gap symbol needs to be added for receive/transmit transition of the terminal device.

A symbol used for AGC may be referred to as an AGC symbol. The AGC symbol may be used to transmit data, or may be used to transmit a reference signal. The AGC symbol is a start symbol of transmission, for example, a symbol 0 of PSCCH/PSSCH transmission, or a symbol 11 of PSFCH transmission. AGC adjustment and data reception and decoding cannot be simultaneously performed. Therefore, a signal in the AGC symbol is a duplication of signal content in a next symbol. In SL transmission, power of all symbols remains equal. Therefore, content of a remaining symbol may be received based on an automatic gain control result of the AGC symbol.

Usually, the AGC symbol and the gap symbol are a 1st symbol and a last symbol of a subframe (or a slot) respectively. In SL transmission, there is usually no base station for scheduling or coordination, and a receive-end UE cannot learn of transmit power or other information of a transmit-end UE. Therefore, a receiver cannot adjust a power amplifier to an appropriate range, and decoding cannot be successfully performed based on direct reception. In an R16 NRV, before each transmission, one symbol is used for AGC. After receiving a 1st symbol, a receive end adjusts a power amplifier based on the symbol to better receive subsequent transmission. However, a larger amount of AGC leads to higher complexity of a receiver and higher overheads.

The AGC symbol is specifically described below.

A symbol configured or preconfigured for SL is determined based on higher-layer parameters sl-StartSymbol and sl-LengthSymbols. The sl-StartSymbol indicates a 1st symbol configured for SL in a slot, and the sl-LengthSymbols indicates a quantity of symbols configured for SL in the slot. The sl-StartSymbol is a symbol index of a 1st symbol among sl-LengthSymbols consecutive symbols configured for SL. A value range of the sl-StartSymbol is any one of {0, 1, 2, 3, 4, 5, 6, 7}. A value of the sl-LengthSymbols is any one of {7, 8, 9, 10, 11, 12, 13, 14}. Resources in an SL BWP or an SL resource pool have a same sl-StartSymbol and a same sl-LengthSymbols.

In a slot, resource allocation for a PSSCH and/or a PSCCH starts from a symbol sl-StartSymbol+1. The resource allocation may also be referred to as mapping (mapping). A 2nd symbol for PSFCH transmission is a symbol sl-StartSymbol+sl-LengthSymbols-2.

In a protocol, the AGC symbol is referred to as a duplicated symbol (duplicated symbol, DS). This means that content in a 1st symbol to which the PSSCH is mapped is duplicated to the symbol. Similarly, content in a 1st symbol to

which the PSCCH is mapped is also duplicated to the symbol. The 1st symbol to which the PSSCH is mapped and the 1st symbol to which the PSCCH is mapped are a same symbol. Content in the 1st symbol includes the PSCCH, the PSSCH, a DM-RS, a phase tracking reference signal (phase tracking reference signal, PT-RS), or a CSI-RS. For example, mapping for the PSCCH and the PSSCH starts from a symbol 1, and at least one of a DM-RS, a PT-RS, or a CSI-RS is further mapped to the symbol 1. In this case, all resource elements REs in the symbol 1 are duplicated to all REs in a symbol 0. In other words, the symbol 1 and the symbol 0 are exactly the same.

In addition, the AGC symbol is referred to as a duplicated symbol in the protocol also because content in a 2nd symbol for PSFCH transmission is duplicated to a 1st symbol for PSFCH transmission. The 1st symbol for PSFCH transmission is a duplicated symbol, to be specific, a symbol used for AGC.

When there are two AGC symbols in a slot, if a terminal device transmits SL information by starting from a first AGC symbol, the first AGC symbol may be content in the duplicated 1st symbol for the PSCCH or the PSSCH. If the terminal device transmits feedback information by starting from a second AGC symbol, the second AGC symbol may be content in the duplicated 1st symbol for the PSFCH.

In subsequent descriptions, an AGC symbol may be an "AGC symbol for a PSCCH/PSSCH" or an "AGC symbol for a PSFCH", provided that there is no ambiguity. If differentiation is needed, the expression "AGC symbol for a PSCCH/PSSCH" or "AGC symbol for a PSFCH" may be used.

5. Sidelink information

Transmission of sidelink information means that a terminal device transmits sidelink information by using a resource in a resource pool. The resource in the resource pool may carry one or more of the following sidelink information: a PSCCH, a PSSCH, a PSFCH, a DMRS, a PT-RS, and a CSI-RS. Sidelink information in LTE does not include the PSFCH. In addition to carrying the sidelink information, the resource in the resource pool may be further used for AGC or for receive/transmit or transmit/receive transition.

The foregoing briefly describes the terms in this application. Details are not described in the following embodiments again. In addition, the foregoing descriptions of the terms are merely descriptions for ease of understanding, and do not limit the protection scope of embodiments of this application.

In NR SL communication, a transmitting UE sends data through a PSSCH, and uses SCI to carry control information used for decoding the data in the PSSCH. The SCI may be sent through a PSCCH. For ease of description, the SCI includes first-order SCI and/or second-order SCI when no differentiation is made. The first-order SCI is transmitted through the PSCCH, and the second-order SCI is transmitted through the PSSCH. A receiving UE sends a HARQ feedback to the transmitting UE through a PSFCH, to notify the transmitting UE of whether the data is correctly received.

For example, in a cyclic prefix orthogonal frequency division multiplexing (cyclic prefix orthogonal frequency division multiplexing, CP-OFDM) communication system, a single subcarrier in a single OFDM symbol is a minimum unit of a frequency domain resource, and is referred to as a resource element RE. A scheduling granularity for the PSCCH and the PSSCH is measured in a unit of a slot in time domain, and is measured in a unit of a subchannel in frequency domain. A subchannel includes {10, 12, 15, 20, 25, 50, 75, 100} RBs, and a specific value is indicated by RRC signaling or is preconfigured. An RB is a frequency domain resource unit including 12 consecutive subcarriers. A scheduling unit for the PSFCH is a symbol in time domain, and is an RB in frequency domain. The RB may also be referred to as a PRB.

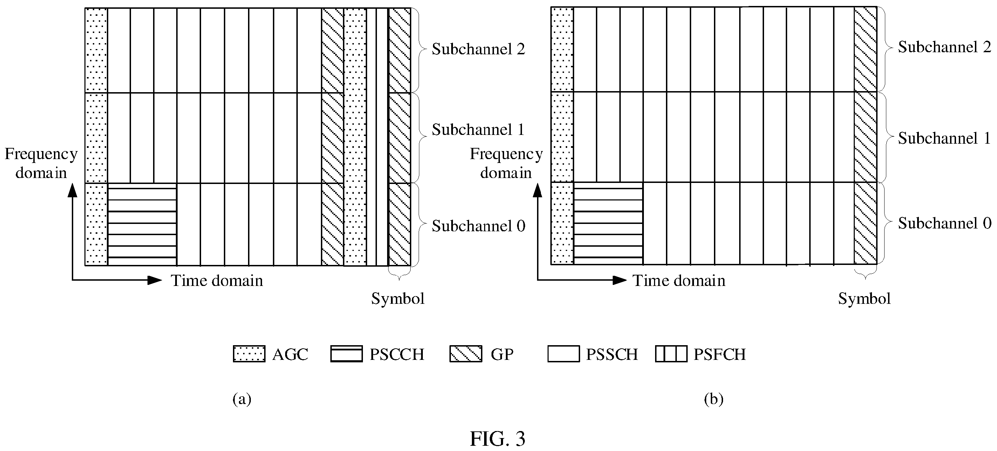

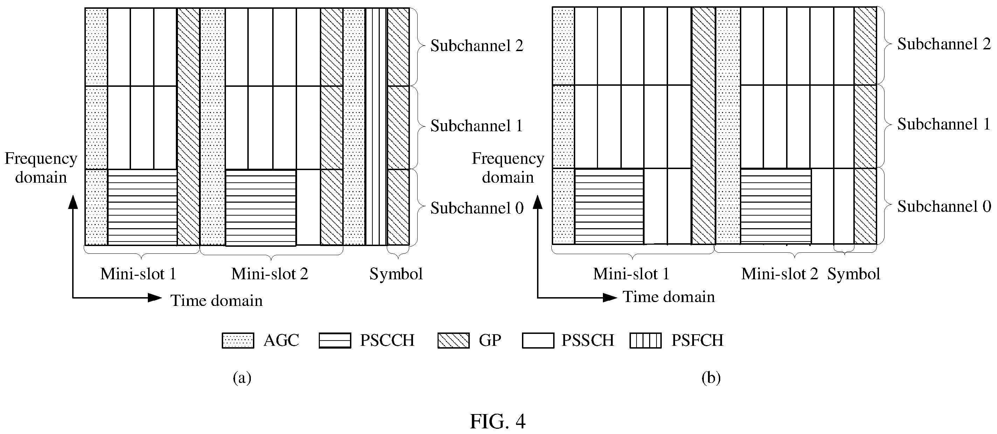

A slot is a minimum granularity for scheduling a time domain resource. Each slot includes 14 symbols, and includes at least one AGC symbol and one GP symbol. To meet a requirement of an industrial internet service or the like for an ultra-low latency, a mini-slot (mini-slot) may need to be used in SL. For ease of understanding, the following describes structures of an SL slot and an SL mini-slot with reference to FIG. 3 and FIG. 4.

FIG. 3 is a diagram of an SL slot structure. For example, a unit of a time domain resource in a resource pool is a slot, and a time domain resource carrying sidelink information is one slot. As shown in (a) in FIG. 3 and (b) in FIG. 3, the time domain resource includes 14 symbols: a symbol 0 to a symbol 13; and a frequency domain resource includes three subchannels.

In (a) in FIG. 3, the resource includes a PSFCH resource. To be specific, there are overheads of three additional symbols (the symbol 11 to the symbol 13). Specifically, the PSFCH resource occupies the symbol 12, the symbol 11 is an AGC symbol and is mainly used for a transmitting UE to adjust a magnification for a received signal, and the symbol 13 is a GP symbol. In addition, the symbol 0 is an AGC symbol and is mainly used for a receiving UE to adjust a magnification for a received signal, and the symbol 10 is a GP symbol and is mainly used for receive/transmit transition or transmit/receive transition. Mapping for a PSCCH starts from the symbol 1, and the PSCCH occupies a subchannel 0 of the symbol 1 to the symbol 3. A PSSCH occupies all time-frequency resources of six symbols (namely, the symbol 4 to the symbol 9), and a subchannel 1 and a subchannel 2 of the symbol 1 to the symbol 3. In (b) in FIG. 3, the resource does not include a PSFCH resource. The symbol 0 is an AGC symbol, and the symbol 13 is a GP symbol. Mapping for a PSCCH starts from the symbol 1, the PSCCH occupies a subchannel 0 of the symbol 1 to the symbol 3, and second-order SCI occupies a 2nd subchannel of the symbol 1 to the symbol 3. A PSSCH occupies all time-frequency resources of nine symbols (namely, the symbol 4 to the symbol 12), and a subchannel 1 and a subchannel 2 of the symbol 1 to the symbol 3. To be specific, start positions of the PSCCH and the PSSCH in time domain are the same. Optionally, first-order SCI may be carried in the PSCCH, and the second-order SCI may be carried in the PSSCH.

FIG. 4 is a diagram of an SL mini-slot structure. For example, a unit of a time domain resource in a resource pool is a slot, and a time domain resource carrying sidelink information is one slot. As shown in (a) in FIG. 4, the time domain resource includes 14 symbols: a symbol 0 to a symbol 13; a frequency domain resource includes three subchannels; and each slot includes two mini-slots.

In (a) in FIG. 4, the resource includes a PSFCH resource. To be specific, there are overheads of three additional symbols (the symbol 11 to the symbol 13). A mini-slot 1 includes the symbol 0 to the symbol 4. A mini-slot 2 includes the symbol 5 to the symbol 10. The symbols 0, 5, and 11 are AGC symbols. The symbols 4, 10, and 13 are GP symbols. A subchannel 0 of the symbol 1 to the symbol 3 and a subchannel 0 of the symbol 6 to the symbol 8 are used for mapping a PSCCH. A subchannel 1 and a subchannel 2 of the symbol 1 to the symbol 3, a subchannel 1 and a subchannel 2 of the symbol 6 to the symbol 8, and all resources of the symbol 9 are used for mapping a PSSCH. The symbol 12 is used for mapping a PSFCH. In (b) in FIG. 4, the resource does not include a PSFCH resource. A mini-slot 1 includes the symbol 0 to the symbol 6. A mini-slot 2 includes the symbol 7 to the symbol 13. The symbols 0 and 7 are AGC symbols. The symbols 6 and 13 are GP symbols. A subchannel 0 of the symbol 1 to the symbol 3 and a subchannel 0 of the symbol 8 to the symbol 10 are used for mapping a PSCCH. A subchannel 1 and a subchannel 2 of the symbol 1 to the symbol 3, a subchannel 1 and a subchannel 2 of the symbol 8 to the symbol 10, and all resources of the symbols 4, 5, 11, and 12 are used for mapping a PSSCH.

Based on this, in a slot with a PSFCH resource, overheads of AGC, a GP, and a PSFCH are as follows: 7/14=50% (as shown in (a) in FIG. 4); and in a slot without a PSFCH resource, overheads of AGC and a GP are as follows: 4/14=29% (as shown in (b) in FIG. 4). It can be learned that the current configuration of the AGC symbol and the GP symbol causes excessively high system overheads, affects resource utilization, and leads to a degradation of system transmission performance. Therefore, a more effective method for configuring the AGC symbol and the GP symbol is urgently needed.

In view of this, this application provides a communication method and apparatus, to set AGC processing time based on capabilities of different UEs and reconfigure a slot structure. According to the method, for a UE with a high processing capability, system overheads can be reduced, spectrum utilization can be improved, and compatibility with a UE with a low processing capability can be further maintained. According to the method, for a UE with a low processing capability, flexibility of symbol configuration can be improved.

For ease of understanding embodiments of this application, the following descriptions are provided.

First, in this application, unless otherwise specified or a logic conflict occurs, terms and/or descriptions in different embodiments are consistent and may be mutually referenced, and technical features in different embodiments may be combined based on an internal logical relationship thereof, to form a new embodiment.

Second, in this application, "at least one" means one or more, and "a plurality of" means two or more. "And/or" describes an association relationship between associated objects, and indicates that three relationships may exist. For example, A and/or B may indicate the following three cases: Only A exists, both A and B exist, and only B exists, where A and B may be in a singular form or a plural form. In text descriptions of this application, the character "/" usually indicates an "or" relationship between associated objects. "At least one of the following items" or a similar expression thereof indicates any combination of the items, including one of the items or any combination of a plurality of the items. For example, at least one of a, b, and c may indicate a, b, c, a and b, a and c, b and c, or a, b, and c. a, b, and c each may be in a singular form or a plural form.

Third, in this application, "first", "second", and various numbers (for example, #1 and #2) indicate differentiation for ease of description, but are not intended to limit the scope of embodiments of this application, for example, are intended to distinguish between different messages but not to describe a specific order or sequence. It should be understood that objects described in this way are interchangeable in an appropriate circumstance, so that a solution other than embodiments of this application can be described.

Fourth, in this application, the descriptions "when...", "in a case that...", "if", and the like all mean that a device performs corresponding processing in an objective case, but are not intended to limit time. The descriptions do not necessarily mean that the device performs a determining action during implementation, and do not mean any other limitation.

Fifth, in this application, the terms "include", "have", and any variants thereof are intended to cover a non-exclusive inclusion. For example, a process, method, system, product, or device that includes a series of steps or units is not necessarily limited to those steps or units that are clearly listed, but may include other steps or units that are not clearly listed or are inherent to the process, method, product, or device.

Sixth, in this application, "indicate" may include a direct indication and an indirect indication. When indication information is described as indicating A, the description may include that the indication information directly indicates A or indirectly indicates A, but does not mean that the indication information necessarily carries A.

An indication manner in embodiments of this application should be understood as covering various methods that can enable a to-be-indicated entity to learn of to-be-indicated information. The to-be-indicated information may be sent as a whole, or may be divided into a plurality of pieces of sub-information for separate sending. In addition, sending periodicities and/or sending occasions of the sub-information may be the same or different. A specific sending method is not limited in this application.

The "indication information" in embodiments of this application may be an explicit indication, to be specific, a direct indication through signaling, or an indication obtained based on a parameter indicated by signaling in combination with another rule or another parameter or obtained through deduction; or may be an implicit indication, to be specific, an indication obtained based on a rule, a relationship, or another parameter or obtained through deduction. This is not specifically limited in this application.

Seventh, in this application, a "protocol" may be a standard protocol in the communication field, for example, may include a 5G protocol, an NR protocol, and a related protocol used in a future communication system. This is not limited in this application. "Preconfigure" may include predefining, for example, being defined in a protocol. The "predefining" may be implemented by prestoring corresponding code or a corresponding table on a device, or implemented in another manner of indicating related information. A specific implementation of the "predefining" is not limited in this application.

Eighth, in this application, "store" may mean being stored in one or more memories. The one or more memories may be separately disposed, or may be integrated in an encoder, a decoder, a processor, or a communication apparatus. Alternatively, some of the one or more memories may be separately disposed, and some of the one or more memories are integrated in a decoder, a processor, or a communication apparatus. A type of the memory may be a storage medium in any form. This is not limited in this application.

Ninth, in this application, "communication" may also be described as "data transmission", "information transmission", "data processing", or the like. The "transmission" includes "sending" and "receiving". This is not limited in this application.

Tenth, in this application, a "first terminal device" may be described as a "UE 1", a "second terminal device" may be described as a "UE 2", and so on. This is not specially emphasized in this application again.

The following describes in detail the communication method provided in embodiments of this application with reference to accompanying drawings. Embodiments provided in this application are applicable to any communication scenario in which a transmit-end device communicates with a receive-end device, for example, may be used in the communication system shown in FIG. 1 and FIG. 2.

In 5G NR, a frequency range 1 (frequency range 1, FR1) corresponds to a frequency range of 450 MHz to 6.0 GHz, namely, a frequency band below 6 GHz, with a maximum channel bandwidth of 100 MHz. A frequency range 2 (frequency range 2, FR2) corresponds to a frequency range of 24.25 GHz to 52.6 GHz, namely, a millimeter-wave frequency band, with a maximum channel bandwidth of 400 MHz. For example, within the FR1, time of performing receive/transmit transition or transmit/receive transition by a UE does not exceed 13 $\mu$s, and time of performing AGC by the UE is related to a receiver implementation and a parameter setting. For example, when a subcarrier spacing (subcarrier spacing, SCS) is 30 kHz, some receivers need time of more than 35 $\mu$s for completing AGC, and some receivers may complete AGC within time of less than 18 $\mu$s. Table 1 shows symbol time corresponding to different SCSs.

Table 1

| SCS (kHz) | Symbol time ($\mu$s) |
|---|---|
| 15 | 71.35 |
| 30 | 35.68 |
| 60 | 17.84 |

As shown in Table 1, within the FR1, SCSs supported by an SL system include 15 kHz, 30 kHz, and 60 kHz. When an SCS is 15 kHz, corresponding time of each symbol is 71.35 $\mu$s; when an SCS is 30 kHz, corresponding time of each symbol is 35.68 $\mu$s; and when an SCS is 60 kHz, corresponding time of each symbol is 17.84 $\mu$s. To be specific, when an SCS is 15 kHz or 30 kHz, duration of 0.5 symbols is greater than 13 $\mu$s, and the symbol may be used for a UE to perform receive/transmit transition or transmit/receive transition. Therefore, when an SCS is 15 kHz or 30 kHz, 0.5 symbols may be set as a GP. Further, AGC time is set, in other words, a slot structure is designed, based on capabilities of different UEs. Certainly, the technical solutions of this application are also applicable to a slot structure in which an SCS is 60 kHz. This is not specifically limited.

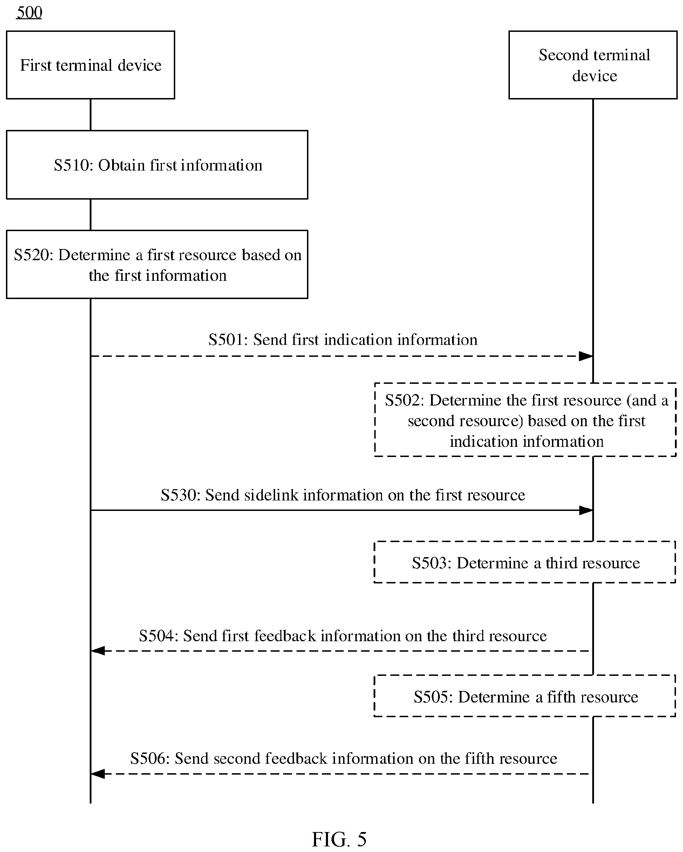

FIG. 5 is a schematic flowchart of a communication method 500 according to an embodiment of this application. As shown in FIG. 5, the method includes a plurality of steps below.

S510: A first terminal device obtains first information.

The first information indicates an AGC processing capability of a second terminal device.

Optionally, the second terminal device sends the first information to the first terminal device, and correspondingly, the first terminal device receives the first information from the second terminal device.

Optionally, a base station sends the first information to the first terminal device, and correspondingly, the first terminal device receives the first information from the base station.

It should be understood that the AGC processing capability of the second terminal device may be understood as duration within which the second terminal device performs AGC.

For example, the base station may configure or preconfigure the AGC processing capability of the second terminal device by using RRC, a MAC CE, or DCI. For example, an AGC processing capability of a terminal device in a current communication system includes a processing capability 1 and a processing capability 2. Duration within which a terminal device with the processing capability 1 performs AGC processing is less than or equal to 18 $\mu$s, and duration within which a terminal device with the processing capability 2 performs AGC processing is greater than or equal to 35 $\mu$s. In this case, comparatively, more AGC resources need to be configured for the terminal device with the processing capability 2 (which may also be referred to as a UE 2), and fewer AGC resources need to be configured for the terminal device with the processing capability 1 (which may also be referred to as a UE 1). To be specific, an AGC processing capability of the UE 1 is stronger than an AGC processing capability of the UE 2.

It should be noted that there may be one or more second terminal devices. When there are a plurality of second terminal devices, the first information may include AGC processing capabilities of all or some of the second terminal devices. This is not specifically limited in this application.

S520: The first terminal device determines a first resource based on the first information.

It should be understood that the first terminal device may determine corresponding AGC processing duration based on different AGC processing capabilities of the second terminal device, and may further determine the first resource for transmitting sidelink information. The sidelink information herein may include but is not limited to a PSCCH and/or a PSSCH. It should be noted that, if there are a plurality of second terminal devices, the first terminal device may determine the first resource based on an AGC processing capability of at least one of the plurality of second terminal devices. For example, when the first terminal device needs to simultaneously send a same data packet to a plurality of second terminal devices (for example, the UE 2 and a UE 3), the first terminal device may determine the first resource based on an AGC processing capability of a second terminal device (for example, the UE 3) with longest AGC processing time. This implementation may be understood as that the first terminal device simultaneously sends a same data packet to the UE 2 and the UE 3 on the first resource in a multicast or broadcast manner. For another example, when the first terminal device separately sends data packets to a plurality of second terminal devices (for example, the UE 2 and the UE 3) in a unicast manner, the first terminal device may learn of AGC processing capabilities of the UE 2 and the UE 3, and separately determine first resources for the UE 2 and the UE 3.

For example, for ease of description, in this embodiment of this application, a resource used for the first terminal device to send sidelink data information and control information to the second terminal device is referred to as the first resource, including a PSSCH resource and/or a PSCCH resource; a resource used for the second terminal device to perform AGC before the second terminal device receives the data information and the control information is referred to as a second resource; a resource used for the second terminal device to transmit first feedback information to the first terminal device is referred to as a third resource; and a resource used for the first terminal device to perform AGC before the first terminal device receives the first feedback information is referred to as a fourth resource. The second resource is determined based on the first information. The third resource is determined based on second information. The second information indicates an AGC processing capability of the first terminal device. Details are not described in the following related parts again.

The following specifically describes how to determine a resource of a slot with a PSFCH and a resource of a slot without a PSFCH.

Case 1: a slot without a PSFCH

In a possible implementation, the first information includes a first value, a start position of a time domain resource of the first resource is located in a 2nd symbol in a first time unit, and a time domain resource of the second resource is located in a second part of a 1st symbol in the first time unit.

For example, the first value may be a bit "1", and indicates that the second terminal device has a strong AGC processing capability, namely, short AGC processing time (for example, the processing capability 1). For example, when an SCS is 30 kHz, corresponding time of each symbol is 35.68 $\mu$s, and "1" indicates that AGC processing duration of the second terminal device is 16 $\mu$s, the second terminal device may occupy half a symbol to complete AGC. It should be noted that this implementation is applicable to a UE with a strong AGC processing capability.

In another possible implementation, the first information includes a second value, the start position of the time domain resource of the first resource is located in a 3rd symbol in the first time unit, and the time domain resource of the second resource is located in the second part of the 1st symbol in the first time unit and the 2nd symbol in the first time unit.

For example, the second value may be a bit "0", and indicates that the second terminal device has a weak AGC processing capability, namely, long AGC processing time (for example, the processing capability 2). For example, when an SCS is 30 kHz, corresponding time of each symbol is 35.68 $\mu$s, and "0" indicates that AGC processing duration of the second terminal device is 36 $\mu$s, the second terminal device needs to occupy more than one symbol to complete AGC. It should be noted that this implementation is applicable to a UE with a weak AGC processing capability.

Optionally, the sidelink information transmitted by the first terminal device on the first resource is carried in a PSSCH in the first time unit. In this case, a time unit in which a PSCCH associated with the PSSCH is located may be the first time unit, or may be located before the first time unit.

In the foregoing two implementations, the 1st symbol is located before the 2nd symbol in time domain, and the 2nd symbol is located before the 3rd symbol in time domain. The 1st symbol in the first time unit includes a first part and the second part, the first part of the 1st symbol is empty, and the first part of the 1st symbol is located before the second part in time domain.

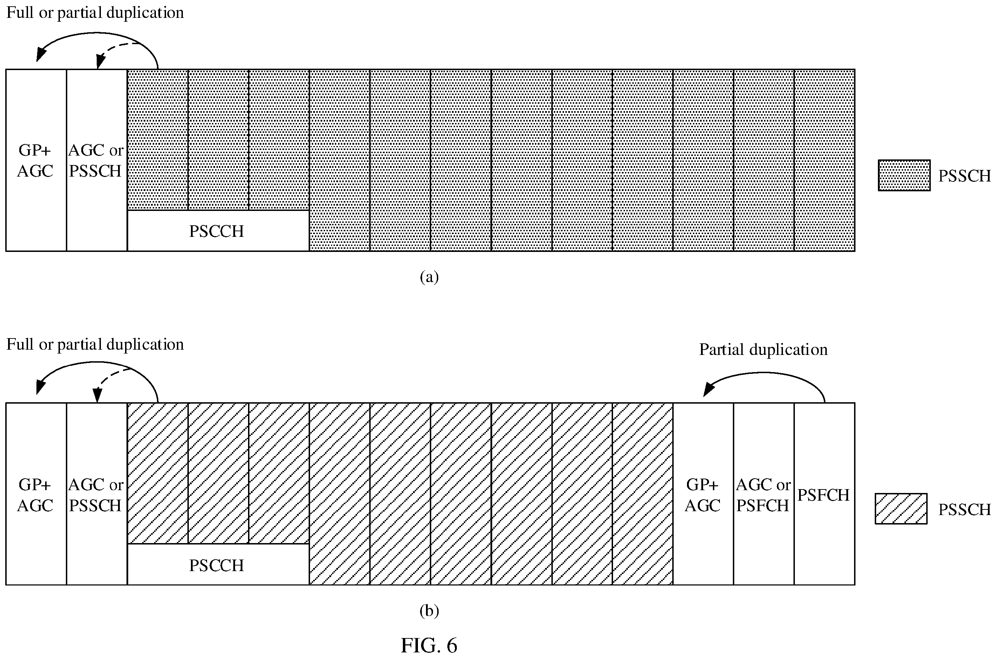

With reference to a diagram of an SL slot structure shown in FIG. 6, a configuration of a slot structure is described by using an example in which a unit of a time domain resource in a resource pool is a slot and a time domain resource for carrying sidelink information is one slot.

As shown in (a) in FIG. 6, a current slot includes 14 symbols. It is assumed that an SCS is 30 kHz and duration of each symbol is 35.68 $\mu$s. In this case, duration of 0.5 symbols may be used for a UE to perform receive/transmit transition or transmit/receive transition. To be specific, in a 1st symbol, a first part is set to be a GP, for example, duration of the first part is greater than or equal to 13 $\mu$s; and a second part is set to be used for AGC, for example, duration of the second part is greater than or equal to 18 $\mu$s. A 2nd symbol is used for AGC or is used for mapping a PSSCH. This depends on the AGC processing capability of the second terminal device (namely, a receiving UE). A 3rd symbol to a 14th symbol are used for mapping the PSSCH for data transmission.

Positions/a position of a time domain resource and/or a frequency domain resource used for mapping a PSCCH in each time unit may be configured by a network device, or may be (pre)configured in a resource pool. Optionally, a start position of a time domain resource occupied by the PSCCH is located in a 3rd symbol in a slot in which the PSCCH is located. To be specific, some or all frequency domain resources of the 3rd symbol to a 5th symbol are further used for mapping the PSCCH. To be specific, to reduce complexity of blind detection on the PSCCH, mapping for the PSCCH may start from the 3rd symbol. In this way, regardless of whether the first terminal device (a transmitting UE) transmits effective information (maps the PSSCH) in a 2nd symbol, a resource position of the PSCCH is fixed, and the second terminal device only needs to perform blind detection on the PSCCH by starting from the 3rd symbol.

Optionally, the first terminal device may send SCI to the second terminal device, to indicate whether the PSSCH is mapped to the 2nd symbol, so that the second terminal device can determine whether the PSSCH needs to be decoded in the 2nd symbol.

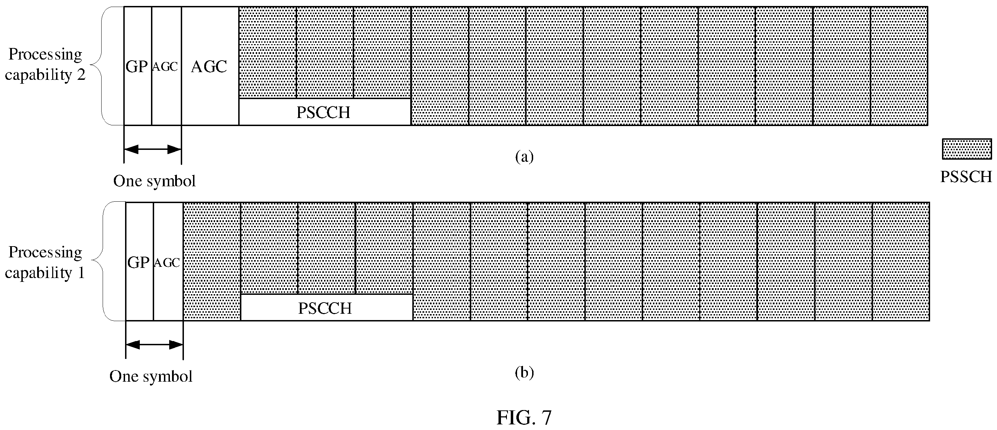

With reference to FIG. 7, the following describes configurations of SL slot structures for different AGC processing capabilities of the second terminal device based on the slot structure in FIG. 6. A current slot includes 14 symbols. It is assumed that an SCS is 30 kHz and duration of each symbol is 35.68 $\mu$s. As shown in (a) in FIG. 7, a second terminal device with an AGC processing capability 2 needs at least 35 $\mu$s to complete AGC. In this case, the first terminal device needs to set the 2nd symbol in (a) in FIG. 6 to be used for AGC. For example, the 2nd symbol may be a duplication of the 3rd symbol. As shown in (b) in FIG. 7, a second terminal device with an AGC processing capability 1 can complete AGC within time of less than 18 $\mu$s. In this case, the first terminal device may use the 2nd symbol in (a) in FIG. 6 for mapping a PSSCH, to increase resources available for data transmission and improve resource utilization.

Optionally, as shown in FIG. 7, for the second terminal device with the AGC processing capability 1, the first resource may occupy a symbol 1 to a symbol 13 in a slot, and the second resource is located in 0.5 symbols before the first resource, to be specific, occupies a second half part of a symbol 0 in the slot. For the second terminal device with the AGC processing capability 2, the first resource occupies a symbol 2 to a symbol 13 in a slot, and the second resource is located in 1.5 symbols before the first resource, to be specific, occupies a second half part of a symbol 0 and a symbol 1 in the slot. Optionally, the first resource and the second resource may be located in a same slot or different slots. This is not limited in this application.

In a possible implementation, the first information includes a first value, a start position of a time domain resource of the first resource is located in a second part of a 1st symbol in a first time unit, an end position of the time domain resource of the first resource is located in a first part of a last symbol in a third time unit, and a time domain resource of the second resource is located in a first part of the 1st symbol in the first time unit.

In another possible implementation, the first information includes a second value, the start position of the time domain resource of the first resource is located in a 2nd symbol in the first time unit, the end position of the time domain resource of the first resource is located in the first part of the last symbol in the third time unit, and the time domain resource of the second resource is located in the 1st symbol in the first time unit.

In the foregoing two implementations, the 1st symbol is located before the 2nd symbol in time domain, and the first part of the 1st symbol is located before the second part of the 1st symbol in time domain. The last symbol in the third time unit includes the first part and a second part, the second part of the last symbol is empty, and the third time unit is the same as the first time unit, or the third time unit is located after the first time unit in time domain.

For example, the third time unit is the same as the first time unit, and a time unit is a slot (a symbol 0 to a symbol 13). For the second terminal device with the AGC processing capability 1 (corresponding to the first value), a start position of a time domain resource of the first resource is a second half part of a symbol 0 in a slot 1, an end position of the time domain resource of the first resource is a first half part of a symbol 13 in the slot 1, and a start position of a time domain resource of the second resource is a first half part of the symbol 0 in the slot 1. For the second terminal device with the AGC processing capability 2 (corresponding to the second value), a start position of a time domain resource of the first resource is a symbol 1 in the slot 1, an end position of the time domain resource of the first resource is the first half part of the symbol 13 in the slot 1, and a start position of a time domain resource of the second resource is the symbol 0 in the slot 1.

For example, the third time unit is located after the first time unit in time domain, and a time unit is a slot (a symbol 0 to a symbol 13). For the second terminal device with the AGC processing capability 1 (corresponding to the first value), a start position of a time domain resource of the first resource is a second half part of a symbol 0 in a slot 1, an end position of the time domain resource of the first resource may be a first half part of a symbol 13 in a slot 3, and a start position of a time domain resource of the second resource is a first half part of the symbol 0 in the slot 1. For the second terminal device with the AGC processing capability 2 (corresponding to the second value), a start position of a time domain resource of the first resource is a symbol 1 in the slot 1, an end position of the time domain resource of the first resource is the first half part of the symbol 13 in the slot 3, and a start position of a time domain resource of the second resource is the symbol 0 in the slot 1. To be specific, in this implementation, the time domain resource of the first resource continuously occupies symbols in the slot 1 to the slot 3. In other words, this may be understood as that the first terminal device sends same data to the second terminal device in the slot 1 to the slot 3 that are consecutive.

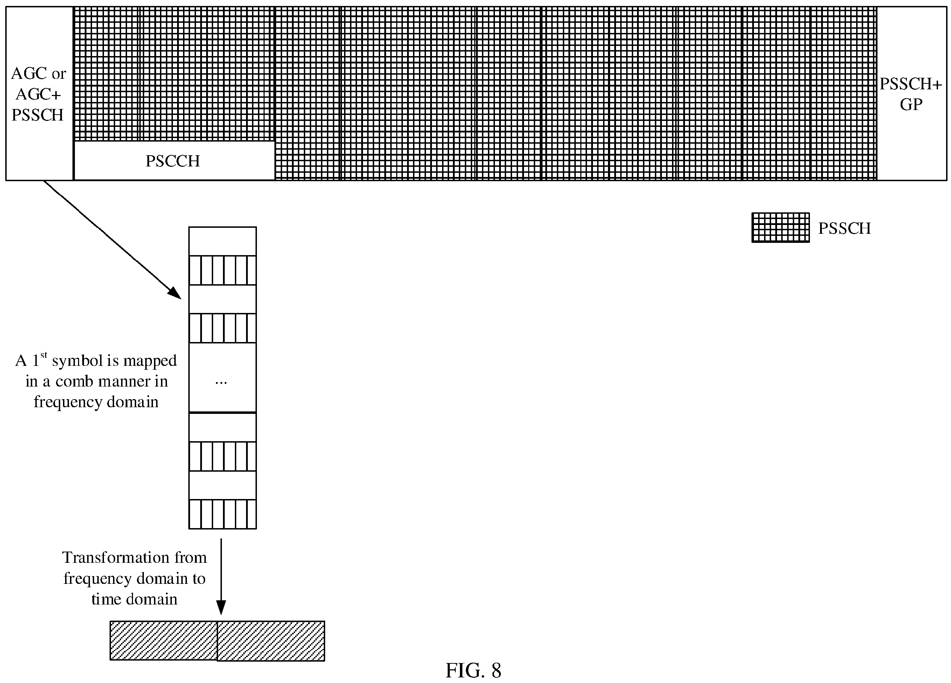

With reference to a diagram of an SL slot structure shown in FIG. 8, a configuration of a slot structure is described by using an example in which a unit of a time domain resource in a resource pool is a slot and a time domain resource for carrying sidelink information is one slot.

As shown in FIG. 8, a current slot includes 14 symbols. It is assumed that an SCS is 30 kHz and duration of each symbol is 35.68 $\mu$s. In this case, duration of 0.5 symbols may be used for a UE to perform receive/transmit transition or transmit/receive transition. To be specific, a first part of a last symbol may be used for a PSSCH, and a second part of the last symbol is used for a GP. All or a part of a 1st symbol is used for AGC. This depends on the AGC processing capability of the second terminal device (that is, a receiving UE). A 2nd symbol to a 14th symbol are used for mapping the PSSCH for data transmission.

In the current slot, a second terminal device with an AGC processing capability 2 needs at least 35 $\mu$s to complete AGC. In this case, the first terminal device may set all of the 1st symbol to be used for AGC. For example, the 1st symbol may be a duplication of the 2nd symbol. A second terminal device with an AGC processing capability 1 can complete AGC within time of less than 18 $\mu$s. In this case, the first terminal device may map the PSSCH to a second part of the 1st symbol, and the second terminal device may perform AGC by using one or more repetitions in time domain, and perform PSSCH decoding by using remaining one or more repetitions, to increase resources available for data transmission and improve resource utilization.

Optionally, for the second terminal device with the AGC processing capability 1, the first resource may occupy a second half part of a symbol 0, a symbol 1 to a symbol 12, and a first half part of a symbol 13 in a slot, and the second resource is located in 0.5 symbols before the first resource, to be specific, occupies a first half part of the symbol 0 in the slot. For the second terminal device with the AGC processing capability 2, the first resource occupies a symbol 1 to a symbol 12 and a first half part of a symbol 13 in a slot, and the second resource is located in one symbol before the first resource, to be specific, occupies a symbol 0 in the slot. In this implementation, a start position and an end position of a time domain resource of the first resource are in a same slot. Optionally, the start position and the end position of the time domain resource of the first resource may alternatively be located in different slots. For example, the start position of the time domain resource of the first resource is located in a symbol 1 in a slot 1, and the end position of the time domain resource of the first resource is located in a first half part of a symbol 13 in a slot 3. This indicates that the first terminal device may continuously send same data to the second terminal device in the slot 1 to the slot 3. This is not limited in this application.

Optionally, resource mapping may be performed for the 1st symbol in a comb manner in frequency domain. For example, if mapping is performed in frequency domain by using a comb 2, it indicates that modulated data is mapped at a spacing of one SCS or RE. Correspondingly, after the 1st symbol is transformed from frequency domain to time domain, for example, transformed from frequency domain to time domain through inverse fast Fourier transformation (inverse fast fourier transformation, IFFT), a time domain symbol includes two repeated parts. To be specific, time domain signals of the first 0.5 symbols and the last 0.5 symbols are the same. Similarly, mapping is performed in frequency domain by using a comb N, it indicates that modulated data is mapped at a spacing of N-1 SCSs or REs. Correspondingly, a time domain symbol includes N repeated parts. Optionally, the second terminal device may perform PSSCH decoding in the symbol by using some of the N repetitions.

Positions/a position of a time domain resource and/or a frequency domain resource used for mapping a PSCCH in each time unit may be configured by a network device, or may be (pre)configured in a resource pool. Optionally, a start position of a time domain resource occupied by the PSCCH is located in a 2nd symbol in a slot in which the PSCCH is located. To be specific, some or all frequency domain resources of the 2nd symbol to a 4th symbol are further used for mapping the PSCCH. To be specific, to reduce complexity of blind detection on the PSCCH, mapping for the PSCCH may start from the 2nd symbol. In this way, regardless of whether the first terminal device (a transmitting UE) transmits effective information (maps the PSSCH) in the 1st symbol, a resource position of the PSCCH is fixed, and the second terminal device only needs to perform blind detection on the PSCCH by starting from the 2nd symbol.

Optionally, the first terminal device may send SCI to the second terminal device, to indicate whether the PSSCH is mapped to the 1st symbol, so that the second terminal device can determine whether the PSSCH needs to be decoded in the 1st symbol.

Case 2: a slot with a PSFCH

In a possible implementation, the second information includes a first value, a time domain resource of the third resource is located in a second-to-last symbol in a second time unit and a last symbol in the second time unit, a time domain resource of the fourth resource is located in a second part of a third-to-last symbol in the second time unit, and the fourth resource is used for the first terminal device to perform AGC.

For example, the first value may be a bit "1", and indicates that the first terminal device has a strong AGC processing capability, namely, short AGC processing time (for example, the processing capability 1). For example, when an SCS is 30 kHz, corresponding time of each symbol is 35.68 $\mu$s, and "1" indicates that AGC processing duration of the first terminal device is 16 $\mu$s, the first terminal device may occupy half a symbol to complete AGC. It should be noted that this implementation is applicable to a UE with a strong AGC processing capability.

In another possible implementation, the second information includes a second value, the time domain resource of the third resource is located in the last symbol in the second time unit, and the time domain resource of the fourth resource is located in the second part of the third-to-last symbol in the second time unit and the second-to-last symbol in the second time unit, where the fourth resource is used for the first terminal device to perform AGC.

For example, the second value may be a bit "0", and indicates that the first terminal device has a weak AGC processing capability, namely, long AGC processing time (for example, the processing capability 2). For example, when an SCS is 30 kHz, corresponding time of each symbol is 35.68 $\mu$s, and "0" indicates that AGC processing duration of the first terminal device is 36 $\mu$s, the first terminal device needs to occupy more than one symbol to complete AGC. It should be noted that this implementation is applicable to a UE with a weak AGC processing capability.

According to the foregoing two implementations, the third-to-last symbol is located before the second-to-last symbol in time domain, and the second-to-last symbol is located before the last symbol in time domain. The third-to-last symbol in the second time unit includes a first part and the second part, the first part of the third-to-last symbol is empty, and the first part of the third-to-last symbol is located before the second part of the third-to-last symbol in time domain.

Optionally, the second time unit is the same as the first time unit, or the second time unit is located after the first time unit in time domain. To be specific, in this technical solution of this application, a PSFCH is not necessarily mapped to each time unit.

As shown in (b) in FIG. 6, a current slot includes 14 symbols. It is assumed that an SCS is 30 kHz and duration of each symbol is 35.68 $\mu$s. In this case, duration of 0.5 symbols may be used for a UE to perform receive/transmit transition or transmit/receive transition. To be specific, in a 1st symbol, a first part is set to be a GP, for example, duration of the first part is greater than or equal to 13 $\mu$s; and a second part is set to be used for AGC, for example, duration of the second part is greater than or equal to 18 $\mu$s. A 2nd symbol is used for AGC or is used for mapping a PSSCH. This depends on the AGC processing capability of the second terminal device (namely, a receiving UE). A 3rd symbol to an 11th symbol are used for mapping the PSSCH for data transmission. Positions/a position of a time domain resource and/or a frequency domain resource used for mapping a PSCCH in each time unit may be configured by a network device, or may be (pre)configured in a resource pool. To be specific, some or all frequency domain resources of a 3rd symbol to a 5th symbol are further used for mapping the PSCCH. A first part of a 12th symbol is set to be a GP, and a second part of the 12th symbol is set to be used for AGC. A 13th symbol is used for AGC or is used for mapping a PSFCH. This depends on the AGC processing capability of the first terminal device (namely, a transmitting UE).

For example, a first terminal device with an AGC processing capability 2 needs at least 35 $\mu$s to complete AGC. In this case, a second-to-last symbol needs to be set for AGC. For example, the second-to-last symbol may be a duplication of a last symbol. A first terminal device with an AGC processing capability 1 can complete AGC within time of less than 18 $\mu$s. In this case, a second-to-last symbol may be used for mapping a PSFCH, to increase resources available for the second terminal device during HARQ feedback transmission, and improve resource utilization.

Optionally, as shown in (b) in FIG. 6, for a second terminal device with the AGC processing capability 1, the first resource may occupy a symbol 1 to a symbol 10 in a slot, the second resource is located in 0.5 symbols before the first resource, to be specific, occupies a second half part of a symbol 0 in the slot, the third resource occupies a symbol 12 and a symbol 13 in the slot, and the fourth resource occupies a second half part of a symbol 11 in the slot. For a second terminal device with the AGC processing capability 2, the first resource occupies a second half part of a symbol 1 and a symbol 2 to a symbol 10 in a slot, the second resource is located in 1.5 symbols before the first resource, to be specific, occupies a second half part of a symbol 0 and the symbol 1 in the slot, the third resource occupies a symbol 13 in the slot, and a fourth resource occupies a second half part of a symbol 11 and a symbol 12 in the slot.

In a possible implementation, the first information includes a first value, a start position of a time domain resource of the first resource is located in a second part of a $1^{st}$ symbol in a first time unit, and a time domain resource of the second resource is located in a first part of the $1^{st}$ symbol in the first time unit. In addition, the second information includes a first value, a time domain resource of the third resource is located in a second-to-last symbol in a fourth time unit, and a time domain resource of the fourth resource is located in a third-to-last symbol in the fourth time unit.

In another possible implementation, the first information includes a second value, the start position of the time domain resource of the first resource is located in a $2^{nd}$ symbol in the first time unit, and the time domain resource of the second resource is located in the $1^{st}$ symbol in the first time unit. In addition, the second information includes a first value, the time domain resource of the third resource is located in the second-to-last symbol in the fourth time unit, and the time domain resource of the fourth resource is located in the third-to-last symbol in the fourth time unit.

It should be understood that, herein, the first value of the first information indicates that the second terminal device has a strong AGC processing capability (for example, the processing capability 1) and short AGC processing duration, and the first value of the second information indicates that the first terminal device has a strong AGC processing capability (for example, the processing capability 1) and short AGC processing duration. In addition, in this application, the first resource and the second resource are determined based on the first information.

It should be further understood that, herein, the second value of the first information indicates that the second terminal device has a weak AGC processing capability (for example, the processing capability 2) and long AGC processing time, and the second value of the second information indicates that the first terminal device has a strong AGC processing capability (for example, the processing capability 2) and long AGC processing time. In addition, in this application, the third resource and the fourth resource are determined based on the second information.

According to the foregoing two implementations, a last symbol of the fourth time unit is a gap symbol, and the fourth time unit is the same as the first time unit, or the fourth time unit is located after the first time unit in time domain.

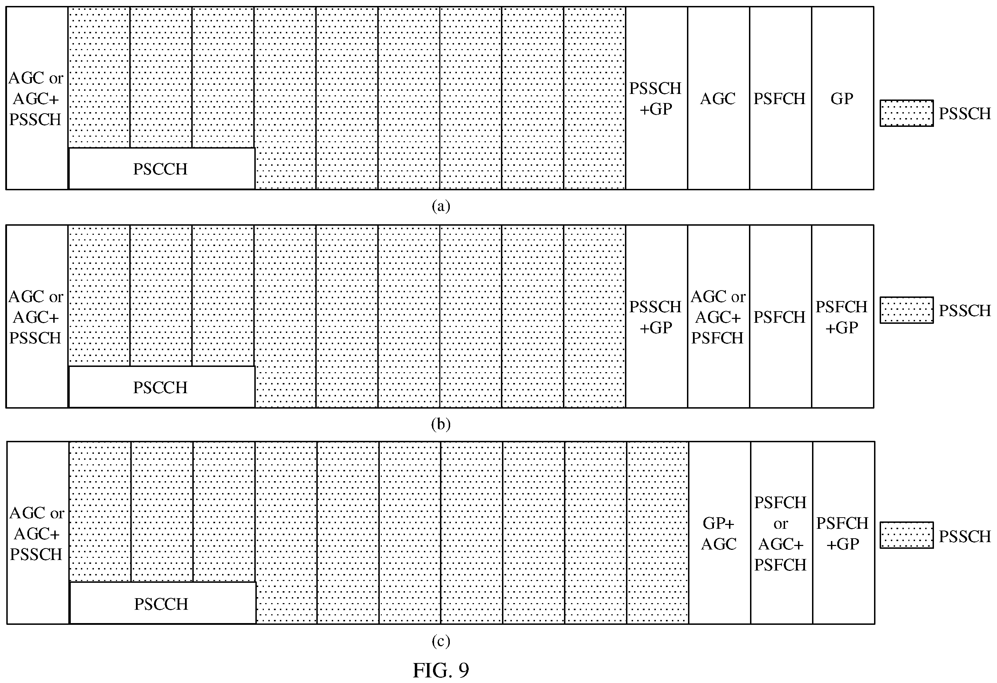

With reference to a diagram of an SL slot structure shown in FIG. 9, a configuration of a slot structure is described by using an example in which a unit of a time domain resource in a resource pool is a slot and a time domain resource for carrying sidelink information is one slot.

As shown in (a) in FIG. 9, a current slot includes 14 symbols. It is assumed that an SCS is 30 kHz and duration of each symbol is 35.68 $\mu$s. In this case, duration of 0.5 symbols may be used for a UE to perform receive/transmit transition or transmit/receive transition. For example, a second terminal device with an AGC processing capability 2 needs at least 35 $\mu$s to complete AGC. In this case, the first terminal device may set all of a $1^{st}$ symbol to be used for AGC. For example, the $1^{st}$ symbol may be a duplication of a $2^{nd}$ symbol. For another example, a second terminal device with an AGC processing capability 1 can complete AGC within time of less than 18 $\mu$s. In this case, the first terminal device may map a PSSCH to a second part of a $1^{st}$ symbol. A $2^{nd}$ symbol to a $10^{th}$ symbol and a first part of an $11^{th}$ symbol are used for mapping the PSSCH, and a second part of the $11^{th}$ symbol is used for a GP. Compared with the slot structure shown in FIG. 8, in this slot structure, three additional symbols need to be reserved. To be specific, a $12^{th}$ symbol is used for AGC, a $13^{th}$ symbol is used for a PSFCH, and a $14^{th}$ symbol is used for a GP.

Positions/a position of a time domain resource and/or a frequency domain resource used for mapping a PSCCH in each time unit may be configured by a network device, or may be (pre)configured in a resource pool. Optionally, a start position of a time domain resource occupied by the PSCCH is located in a $2^{nd}$ symbol in a slot in which the PSCCH is located. To be specific, some or all frequency domain resources of the $2^{nd}$ symbol to a $4^{th}$ symbol are further used for mapping the PSCCH.

Optionally, as shown in (a) in FIG. 9, for the second terminal device with the AGC processing capability 1, the first resource may occupy a second half part of a symbol 0, a symbol 1 to a symbol 9, and a first half part of a symbol 10 in a slot, the second resource is located in 0.5 symbols before the first resource, to be specific, occupies the second half part of the symbol 0 in the slot, the third resource occupies a symbol 12 in the slot, and the fourth resource occupies a symbol 11 in the slot. For the second terminal device with the AGC processing capability 2, the first resource occupies a symbol 1 to a symbol 9 and a first half part of a symbol 10 in a slot, the second resource is located in one symbol before the first resource, to be specific, occupies a symbol 0 in the slot, the third resource occupies a symbol 12 in the slot, and the fourth resource occupies a symbol 11 in the slot.

Optionally, the first terminal device may send SCI to the second terminal device, to indicate whether the PSSCH is mapped to the $1^{st}$ symbol, so that the second terminal device can determine whether the PSSCH needs to be decoded in the $1^{st}$ symbol.

In a possible implementation, the first information includes a first value, a start position of a time domain resource of the first resource is located in a second part of a $1^{st}$ symbol in a first time unit, and a time domain resource of the second resource is located in a first part of the 1st symbol in the first time unit; and/or the second information includes a first value, a time domain resource of the third resource is located in a second part of a third-to-last symbol in a fourth time unit, a second-to-last symbol in the fourth time unit, and a first part of a last symbol in the fourth time unit, and a time domain resource of the fourth resource is located in a first part of the third-to-last symbol in the fourth time unit.

In another possible implementation, the first information includes a second value, the start position of the time domain resource of the first resource is located in a 2nd symbol in the first time unit, and the time domain resource of the second resource is located in the 1st symbol in the first time unit; and/or the second information includes a second value, the time domain resource of the third resource is located in the second-to-last symbol in the fourth time unit and the first part of the last symbol in the fourth time unit, and the time domain resource of the fourth resource is located in the third-to-last symbol in the fourth time unit.

According to the foregoing two implementations, the 1st symbol is located before the 2nd symbol in time domain, the first part of the 1st symbol is located before the second part of the 1st symbol in time domain, and the first part of the last symbol is located before the second part of the last symbol in time domain. The second part of the last symbol in the fourth time unit is empty, and the fourth time unit is the same as the third time unit, or the fourth time unit is located after the third time unit in time domain.

As shown in (b) in FIG. 9, a current slot includes 14 symbols. It is assumed that an SCS is 30 kHz and duration of each symbol is 35.68 $\mu$s. In this case, duration of 0.5 symbols may be used for a UE to perform receive/transmit transition or transmit/receive transition.

For example, a second terminal device with an AGC processing capability 2 needs at least 35 $\mu$s to complete AGC. In this case, the first terminal device may set all of a 1st symbol to be used for AGC. For example, the 1st symbol may be a duplication of a 2nd symbol. A second terminal device with an AGC processing capability 1 can complete AGC within time of less than 18 $\mu$s. In this case, the first terminal device may map a PSSCH to a second part of a 1st symbol.

For example, a first terminal device with the AGC processing capability 2 needs at least 35 $\mu$s to complete AGC. In this case, all of a 12th symbol may be set to be used for AGC. A first terminal device with the AGC processing capability 1 can complete AGC within time of less than 18 $\mu$s. In this case, a PSFCH may be mapped to a second part of a 12th symbol, to improve reliability of a HARQ feedback.

In the slot, a 2nd symbol to a 10th symbol and a first part of an 11th symbol are used for mapping the PSSCH, a second part of the 11th symbol is used for a GP, a 13th symbol is used for mapping the PSFCH, and a 14th symbol is used for a GP.

Positions/a position of a time domain resource and/or a frequency domain resource used for mapping a PSCCH in each time unit may be configured by a network device, or may be (pre)configured in a resource pool. Optionally, a start position of a time domain resource occupied by the PSCCH is located in a 2nd symbol in a slot in which the PSCCH is located. To be specific, some or all frequency domain resources of the 2nd symbol to a 4th symbol are further used for mapping the PSCCH.

Optionally, as shown in (b) in FIG. 9, for the second terminal device with the AGC processing capability 1, the first resource may occupy a second half part of a symbol 0, a symbol 1 to a symbol 9, and a first half part of a symbol 10 in a slot, the second resource is located in 0.5 symbols before the first resource, to be specific, occupies the second half part of the symbol 0 in the slot, the third resource occupies a second half part of a symbol 11, a symbol 12, and a first half part of a symbol 13 in the slot, and the fourth resource occupies a first half part of the symbol 11 in the slot. For the second terminal device with the AGC processing capability 2, the first resource occupies a symbol 1 to a symbol 9 and a first half part of a symbol 10 in a slot, the second resource is located in one symbol before the first resource, to be specific, occupies a symbol 0 in the slot, the third resource occupies a second half part of a symbol 11, a symbol 12, and a first half part of a symbol 13 in the slot, and the fourth resource occupies a first half part of the symbol 11 in the slot.

Optionally, the first terminal device may send SCI to the second terminal device, to indicate whether the PSSCH is mapped to the 1st symbol, so that the second terminal device can determine whether the PSSCH needs to be decoded in the 1st symbol.

In a possible implementation, the first information includes a first value, a start position of a time domain resource of the first resource is located in a second part of a 1st symbol in a first time unit, and a time domain resource of the second resource is located in a first part of the 1st symbol in the first time unit; and/or the second information includes a first value, a time domain resource of the third resource is located in a second-to-last symbol in a fourth time unit and a first part of a last symbol in the fourth time unit, and a time domain resource of the fourth resource is located in a second part of a third-to-last symbol in the fourth time unit.

In another possible implementation, the first information includes a second value, the start position of the time domain resource of the first resource is located in a 2nd symbol in the first time unit, and the time domain resource of the second resource is located in the 1st symbol in the first time unit; and/or the second information includes a second value, the time domain resource of the third resource is located in a second part of the second-to-last symbol in the fourth time unit and the first part of the last symbol in the fourth time unit, and the time domain resource of the fourth resource is located in the second part of the third-to-last symbol in the fourth time unit and a first part of the second-to-last symbol in the fourth time unit.

According to the foregoing two implementations, the 1$^{st}$ symbol is located before the 2$^{nd}$ symbol in time domain, the first part of the 1$^{st}$ symbol is located before the second part of the 1$^{st}$ symbol in time domain, and the first part of the second-to-last symbol is located before the second part of the second-to-last symbol in time domain. The second part of the last symbol in the fourth time unit is empty, and the fourth time unit is the same as the third time unit, or the fourth time unit is located after the third time unit in time domain. The first part of the third-to-last symbol in the fourth time unit and the second part of the last symbol in the fourth time unit are empty, and the fourth time unit is the same as the first time unit, or the fourth time unit is located after the first time unit in time domain.

As shown in (c) in FIG. 9, a current slot includes 14 symbols. It is assumed that an SCS is 30 kHz and duration of each symbol is 35.68 $\mu$s. In this case, duration of 0.5 symbols may be used for a UE to perform receive/transmit transition or transmit/receive transition.

For example, a second terminal device with an AGC processing capability 2 needs at least 35 $\mu$s to complete AGC. In this case, the first terminal device may set all of a 1$^{st}$ symbol to be used for AGC. For example, the 1$^{st}$ symbol may be a duplication of a 2$^{nd}$ symbol. A second terminal device with an AGC processing capability 1 can complete AGC within time of less than 18 $\mu$s. In this case, the first terminal device may map a PSSCH to a second part of a 1$^{st}$ symbol.

For example, a first terminal device with the AGC processing capability 2 needs at least 35 $\mu$s to complete AGC. In this case, a first part of a 13$^{th}$ symbol may be set to be used for AGC. A first terminal device with the AGC processing capability 1 can complete AGC within time of less than 18 $\mu$s. In this case, a PSFCH may be mapped to all of a 13$^{th}$ symbol, to improve reliability of a HARQ feedback.

In the slot, a 2$^{nd}$ symbol to an 11$^{th}$ symbol are used for mapping the PSSCH, a first part of a 12$^{th}$ symbol and a second part of a 14$^{th}$ symbol are used for a GP, and a first part of the 14$^{th}$ symbol is used for mapping the PSFCH.

Positions/a position of a time domain resource and/or a frequency domain resource used for mapping a PSCCH in each time unit may be configured by a network device, or may be (pre)configured in a resource pool. Optionally, a start position of a time domain resource occupied by the PSCCH is located in a 2$^{nd}$ symbol in a slot in which the PSCCH is located. To be specific, some or all frequency domain resources of the 2$^{nd}$ symbol to a 4$^{th}$ symbol are further used for mapping the PSCCH.

Optionally, as shown in (c) in FIG. 9, for the second terminal device with the AGC processing capability 1, the first resource may occupy a second half part of a symbol 0, a symbol 1 to a symbol 9, and a first half part of a symbol 10 in a slot, the second resource is located in 0.5 symbols before the first resource, to be specific, occupies the second half part of the symbol 0 in the slot, the third resource occupies a symbol 12 and a first half part of a symbol 13 in the slot, and the fourth resource occupies a second half part of a symbol 11 in the slot. For the second terminal device with the AGC processing capability 2, the first resource occupies a symbol 1 to a symbol 9 and a first half part of a symbol 10 in a slot, the second resource is located in one symbol before the first resource, to be specific, occupies a symbol 0 in the slot, the third resource occupies a second half part of a symbol 12 and a first half part of a symbol 13 in the slot, and the fourth resource occupies a second half part of a symbol 11 and a first half part of the symbol 12 in the slot.

Optionally, the first terminal device may send SCI to the second terminal device, to indicate whether the PSSCH is mapped to the 1$^{st}$ symbol, so that the second terminal device can determine whether the PSSCH needs to be decoded in the 1$^{st}$ symbol.

S530: The first terminal device sends sidelink information to the second terminal device on the first resource.

Correspondingly, the second terminal device receives the sidelink information from the first terminal device.

For example, the sidelink information may include one or more of the following: a PSCCH, a PSSCH, or a reference signal. The reference information may be a DM-RS, a PT-RS, a CSI-RS, or the like.

Optionally, before performing step S530, the first terminal device may indicate the first resource and/or the second resource to the second terminal device, to be specific, perform the following steps S501 and S502, so that the second terminal device quickly detects and obtains the sidelink information. In this implementation, first indication information and the sidelink information may be sequentially sent in different slots.

S501: The first terminal device sends the first indication information to the second terminal device.

Correspondingly, the second terminal device receives the first indication information from the first terminal device.

The first indication information indicates the second resource on which the second terminal device is to perform AGC, or the first indication information indicates the first resource.

S502: The second terminal device determines the first resource and the second resource based on the first indication information.

Optionally, the first indication information may alternatively be included in the sidelink information in step S530. For example, the first indication information may be first-order SCI and is carried in a PSCCH, or the first indication information may be second-order SCI and is carried in a PSSCH. To be specific, in this implementation, the first indication information and the sidelink information may be sent in a same slot.

Optionally, the first indication information may alternatively be semi-static information, for example, is predetermined by the first terminal device and the second terminal device through negotiation, or is configured or preconfigured by a base station for the first terminal device and the second terminal device.

To be specific, in this embodiment of this application, the first indication information may or may not be sent, may be sent in a PSCCH resource or a PSSCH resource, may be sent with the sidelink information in a same time unit or sent earlier than the sidelink information, and so on. This is not specifically limited in this application.

Optionally, for a slot with a PSFCH, after receiving the sidelink information, the second terminal device may send the first feedback information to the first terminal device on a corresponding PSFCH resource (namely, the third resource), to be specific, perform steps S503 and S504.

S503: The second terminal device determines the third resource.

The third resource is used to transmit the first feedback information. The first feedback information is, for example, a HARQ feedback, and indicates a receiving status of the sidelink information or is used for a repeat request indication.

For example, it is assumed that a periodicity of a PSFCH resource is 4. To be specific, a PSFCH resource exists in one of every four slots. For example, a PSFCH resource exists in a slot 0, a slot 4, a slot 8, a slot 12, and the like. In this case, the slot 0, the slot 4, the slot 8, the slot 12, and the like are PSFCH slots. In addition, two sl-MinTimeGapPSFCH slots are configured. To be specific, a PSFCH in a slot 8 and a PSSCH corresponding to the PSFCH need to be spaced apart by at least two slots. Therefore, the PSFCH in the slot 8 corresponds to a PSSCH in a slot 3 to a slot 6. To be specific, if the second terminal device receives the PSSCH in the slot 3 to the slot 6, the second terminal device sends ACK/NACK information on the PSFCH resource in the slot 8. In addition, specific content of the first feedback information is not specifically limited in this application.

In this embodiment of this application, the PSFCH resource may be understood as a resource included in an entire PSFCH symbol, and the third resource may be understood as a PRB resource in a PSFCH symbol that is actually occupied by the second terminal device to feed back the receiving status of the sidelink information.

S504: The second terminal device sends the first feedback information to the first terminal device on the third resource.

Correspondingly, the first terminal device receives the first feedback information from the second terminal device on the third resource.

The first feedback information may be used to feed back the receiving status of the sidelink information.

Optionally, a mapping relationship between the third resource and the first resource in steps S503 and S504 may be (pre)configured in a resource pool. For example, the time domain resource of the third resource may be located in two slots after the time domain resource of the first resource.

Optionally, for a slot with a PSFCH, if a UE (for example, the first terminal device) that receives a HARQ feedback has the AGC processing capability 1, it indicates that the first terminal device has a strong AGC processing capability and corresponds to short AGC processing duration. In this case, after receiving the sidelink information, the second terminal device may perform HARQ feedback by using resources of two effective symbols in the slot (for example, as shown in (b) in FIG. 6). To fully utilize two symbols to improve reliability of a HARQ feedback, different mapping relationships may be separately established between the two symbols and PSSCH resources, so that a UE (for example, the second terminal device) that sends a HARQ feedback may perform transmission through frequency hopping between two PSFCH symbols, to obtain a frequency domain diversity gain. To be specific, the second terminal device may send feedback information to the first terminal device in a frequency hopping mode. This includes the following steps S505 and S506.

It should be noted that steps S503 and S504 and steps S505 and S506 may be considered as two implementations of sending, by the second terminal device, feedback information to the first terminal device, and may be performed separately or in combination. Specifically, a resource for sending feedback information in steps S503 and S504 is usually configured or preconfigured in a resource pool. For example, feedback information is sent to the first terminal device in a PRB (for example, a PRB 1) of a symbol (for example, a symbol 13 in a slot 1) in which a PSFCH is located. In comparison, a resource for sending feedback information in steps S505 and S506 includes two symbols, and is mainly applicable to a first terminal device with a strong AGC processing capability. The second terminal device sends feedback information to the first terminal device at different frequency domain positions (for example, a $PRB_m$ of a symbol 12 and a $PRB_n$ of the symbol 13) in two symbols (for example, the symbol 12 and the symbol 13 in the slot 1). In this feedback mode, impact of frequency selective fading can be reduced, and reliability of a HARQ feedback is improved, so that system transmission performance is ensured.

S505: The second terminal device determines a fifth resource.

The fifth resource is located in a first time subunit and a second time subunit in the fourth time unit, and a frequency domain position of the fifth resource in the first time subunit is different from a frequency domain position of the fifth resource in the second time subunit.

For example, each time subunit may be a complete symbol, or may include parts of two adjacent symbols (for example, a second half part of a previous symbol and a first half part of a next symbol).

In a possible implementation, the first time subunit and the second time subunit in the fourth time unit are used to feed back a receiving status of data sent in L time units before the fourth time unit.

The frequency domain position of the fifth resource in the first time subunit satisfies:

$$[(i + j \cdot L) \cdot M_{set}, (i + 1 + j \cdot L) \cdot M_{set} - 1] \qquad (1)$$

To be specific, an index of a frequency domain subunit of the fifth resource in the first time subunit is within the foregoing index range. For example, the frequency domain subunit is a PRB or an RB.

The frequency domain position of the fifth resource in the second time subunit satisfies:

$$[(i + j \cdot L + Q) \bmod (N \cdot L) \cdot M_{set}, (i + 1 + j \cdot L + Q) \bmod (N \cdot L)) \cdot M_{set} - 1] \qquad (2)$$

Q is an integer, and 0<Q<N×L. Optionally, $Q = N \cdot L / 2$. In this case, the formula (2) may be replaced with the following formula:

$$[(i + j \cdot L + N \cdot L / 2) \bmod (N \cdot L) \cdot M_{set}, (i + 1 + j \cdot L + N \cdot L / 2) \bmod (N \cdot L)) \cdot M_{set} - 1] \qquad (3)$$

To be specific, an index of a frequency domain subunit of the fifth resource in the second time subunit is within the foregoing index range. For example, the frequency domain subunit is a PRB or an RB.

$M_{set}$ is a quantity of frequency domain subunits in a frequency domain subunit set in which the frequency domain position of the fifth resource in the first time subunit or the second time subunit is located. Each frequency domain subunit set includes one or more frequency domain subunits. N is a quantity of frequency domain units in each of the L time units. i is an index, in the L time units, of a time unit in which the sidelink information is located. j is an index, in the N frequency domain units, of a frequency domain unit in which the sidelink information is located. Q is a cyclic shift offset between a frequency domain subunit set in which the frequency domain position of the fifth resource in the first time subunit is located and a frequency domain subunit set in which the frequency domain position of the fifth resource in the second time subunit is located. Q is an integer greater than 0 and less than $N \cdot L$. i is an integer, and 0≤i<L. j is an integer, and 0≤j<N. L is an integer greater than or equal to 1, and N is an integer greater than or equal to 1.

In other words, Q is a quantity of cyclic shifts of a frequency domain subunit set in which the frequency domain position of the fifth resource in the first time subunit is located relative to a frequency domain subunit set in which the frequency domain position of the fifth resource in the second time subunit is located. 0<Q<$N \cdot L$ indicates that the frequency domain subunit set in which the frequency domain position of the fifth resource in the first time subunit is located is different from the frequency domain subunit set in which the frequency domain position of the fifth resource in the second time subunit is located. This can ensure that impact of frequency selective fading is reduced and feedback reliability is improved when feedback information is transmitted in a frequency hopping mode.

Optionally, the quantities indicated by $M_{set}$, L, and N are (pre)configured in a resource pool. This is not specifically limited in this application.

S506: The second terminal device sends second feedback information to the first terminal device on the fifth resource.

Correspondingly, the first terminal device receives the second feedback information from the second terminal device on the fifth resource.

The second feedback information is used to feed back the receiving status of the sidelink information.

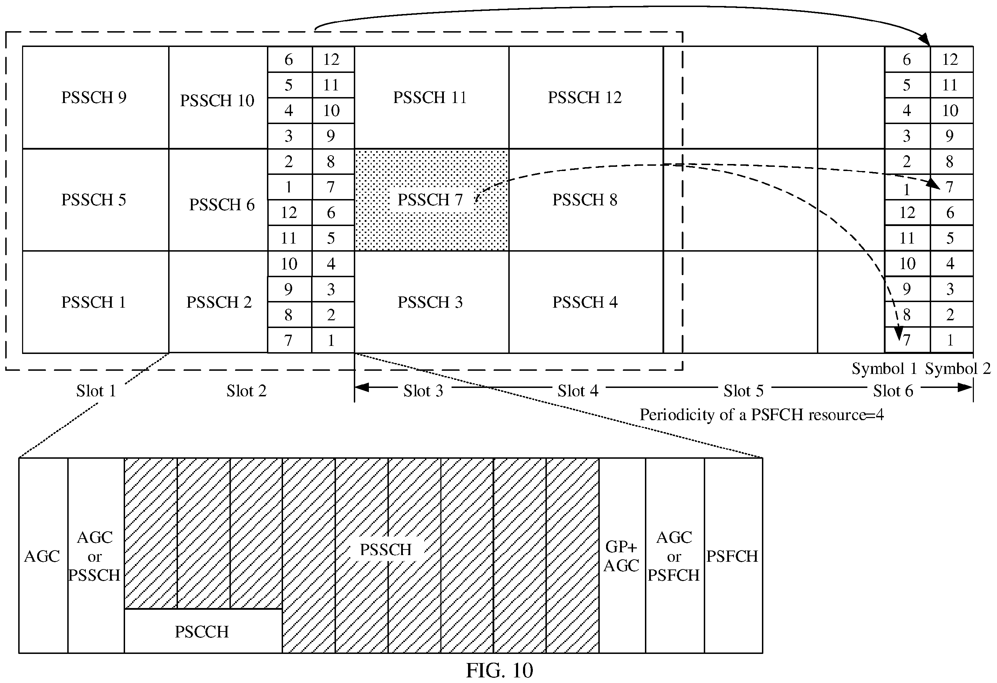

With reference to FIG. 10, an example in which the second terminal device transmits the second feedback information through frequency hopping between two PSFCH symbols (for example, a symbol 1 and a symbol 2) is used below for description. The symbol 1 is located before the symbol 2 in time domain.

As shown in FIG. 10, it is assumed that a periodicity of a PSFCH resource is 4. To be specific, a PSFCH resource exists in one of every four slots. To be specific, a PSFCH resource exists in a slot 2 and a slot 6. For example, L=4, and N=3. To be specific, a slot 1 to a slot 4 that are used to transmit a PSSCH (which is an example of the sidelink information) each include three subchannels. Resources available for sending the PSSCH in the slot 1 to the slot 4 are numbered a PSSCH 1 to a PSSCH 12 through time-domain numbering followed by frequency-domain numbering. Optionally, the PSSCH 1 to the PSSCH 12 in the slot 1 to the slot 4 may alternatively be numbered through frequency-domain numbering followed by time-domain numbering. This is not specifically limited in this application. If the resources PSSCH 1 to PSSCH 12 in the slot 1 to the slot 4 are numbered through frequency-domain numbering followed by time-domain numbering, only i+j·L in the foregoing formula (1) to formula (3) needs to be replaced with i·N+j, to represent the frequency domain position of the fifth resource in the first time subunit and the frequency domain position of the fifth resource in the second time subunit respectively. The last two symbols in the slot 6 each are equally divided into 12 PRB sets that are numbered 1 to 12 and that are sequentially associated with the PSSCH 1 to the PSSCH 12. Each PRB set includes $M_{set}$ PRBs. In the last two symbols in the slot 6, an order of association between a PSFCH resource and a PSSCH resource in a symbol 1 is cyclically shifted

$\lfloor N \cdot L/2 \rfloor$ times relative to an order of association between a PSFCH resource and a PSSCH resource in a symbol 2. For example, the order of association between a PSFCH resource and a PSSCH resource in the symbol 1 is cyclically shifted six times, namely, Q=6, relative to the order of association between a PSFCH resource and a PSSCH resource in the symbol 2.

To be specific, PSFCH resources in the slot 2 and the slot 6 are associated with PSSCH resources in the slot 1 to the slot 4. For example, if the first terminal device sends the PSSCH 7 to the second terminal device in a 2nd subchannel in the slot 3, the second terminal device may send the second feedback information to the first terminal device on a PSFCH resource numbered 7 in the symbol 1 in the slot 6 and a PSFCH resource numbered 7 in the symbol 2 in the slot 6, to indicate whether the sidelink information is successfully received.

According to this implementation, the second terminal device may send a HARQ feedback to the first terminal device at different frequency domain positions in two time subunits, to reduce impact of frequency selective fading and improve feedback reliability.

According to the solutions provided in this application, AGC processing time is set based on AGC processing capabilities of different UEs, and a slot structure is reconfigured. According to the method, for a UE with a high AGC processing capability, system overheads can be reduced, spectrum utilization can be improved, and compatibility with a UE with a low AGC processing capability can be further maintained. According to the method, for a UE with a low AGC processing capability, flexibility of symbol configuration can be improved. Further, for a UE with a high AGC processing capability, a mapping relationship between a PSSCH resource and a PSFCH resource is established, so that the second terminal device can transmit the second feedback information in a frequency hopping mode, to improve reliability of a HARQ feedback.

It should be noted that the foregoing descriptions are merely examples provided for ease of understanding the technical solutions, and should not be construed as any limitation. The slot with a PSFCH and the slot without a PSFCH that are provided above may be used in combination or separately. To be specific, the first resource, the second resource, the third resource, the fourth resource, and the fifth resource may be located in a same time unit, or may be located in different time units. In other words, the first resource and the second resource may be determined by using the technical solutions of this application, and the third resource, the fourth resource, and the fifth resource may be determined by using a conventional technical solution, and so on. This is not limited in this application. In addition, configurations of a time unit with a PSFCH and a time unit without a PSFCH that are disclosed in the technical solutions of this application may be configured or preconfigured in a resource pool. In addition, whether data or feedback information is sent in the time unit is not specifically limited in this application.

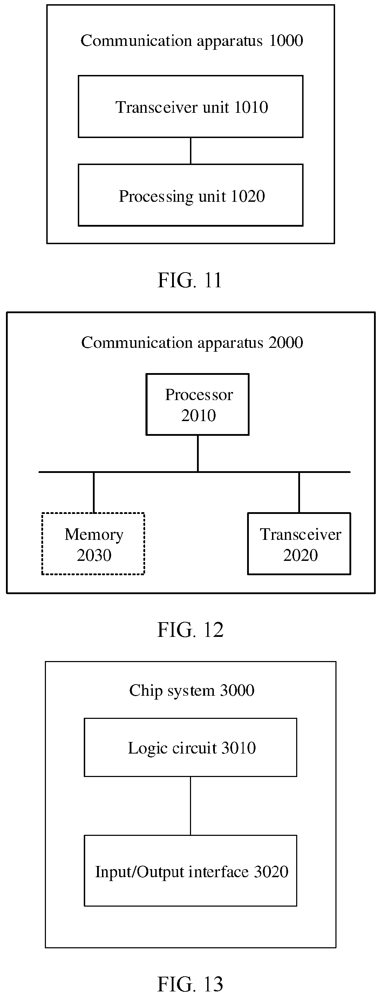

The foregoing describes in detail embodiments on a communication method side of this application with reference to FIG. 1 to FIG. 10. The following describes in detail embodiments on a communication apparatus side of this application with reference to FIG. 11 and FIG. 12. It should be understood that descriptions of the apparatus embodiments correspond to the descriptions of the method embodiments. Therefore, for a part that is not described in detail, refer to the foregoing method embodiments.

FIG. 11 is a block diagram of a communication apparatus 1000 according to an embodiment of this application. As shown in FIG. 11, the apparatus 1000 may include a transceiver unit 1010 and a processing unit 1020. The transceiver unit 1010 may communicate with the outside, and the processing unit 1020 is configured to process data. The transceiver unit 1010 may also be referred to as a communication interface or a sending/receiving unit.

In a possible design, the apparatus 1000 may implement corresponding steps or processes performed by the first terminal device (for example, the transmitting UE 1) in the foregoing method embodiments. The processing unit 1020 is configured to perform a processing-related operation of the first terminal device in the foregoing method embodiments, and the transceiver unit 1010 is configured to perform a sending/receiving-related operation of the first terminal device in the foregoing method embodiments.

In another possible design, the apparatus 1000 may implement corresponding steps or processes performed by the second terminal device (for example, the receiving UE 2) in the foregoing method embodiments. The processing unit 1020 is configured to perform a processing-related operation of the second terminal device in the foregoing method embodiments, and the transceiver unit 1010 is configured to perform a sending/receiving-related operation of the second terminal device in the foregoing method embodiments.

It should be understood that the device 1000 herein is implemented in a form of functional units. The term "unit" herein may indicate an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art can understand that the device 1000 may be specifically a transmit end in the foregoing embodiments, and may be configured to perform processes and/or steps corresponding to the transmit end in the foregoing method embodiments; or the device 1000 may be specifically a receive end in the foregoing embodiments, and may be configured to perform processes and/or steps corresponding to the receive end in the foregoing method embodiments. To avoid repetition, details are not described herein again.

The device 1000 in the foregoing solutions has a function of implementing corresponding steps performed by the transmit end in the foregoing methods. Alternatively, the device 1000 in the foregoing solutions has a function of implementing corresponding steps performed by the receive end in the foregoing methods. The function may be implemented by hardware, or may be implemented by hardware executing corresponding software. The hardware or the software includes one or more modules corresponding to the foregoing functions. For example, the transceiver unit may be replaced with a transceiver (for example, a sending unit in the transceiver unit may be replaced with a transmitter, and a receiving unit in the transceiver unit may be replaced with a receiver), and another unit, for example, the processing unit, may be replaced with a processor, to separately perform sending and receiving operations and a related processing operation in the method embodiments.

In addition, the transceiver unit may alternatively be a transceiver circuit (for example, may include a receiver circuit and a transmitter circuit), and the processing unit may be a processing circuit. In embodiments of this application, the apparatus in FIG. 11 may be the receive end or the transmit end in the foregoing embodiments, or may be a chip or a chip system, for example, a system on chip (system on chip, SoC). The transceiver unit may be an input/output circuit or a communication interface. The processing unit is a processor, a microprocessor, or an integrated circuit that is integrated on the chip. This is not limited herein.

FIG. 12 shows a communication apparatus 2000 according to an embodiment of this application. As shown in FIG. 12, the apparatus 2000 includes a processor 2010 and a transceiver 2020. The processor 2010 and the transceiver 2020 communicate with each other through an internal connection path. The processor 2010 is configured to execute instructions, to control the transceiver 2020 to send a signal and/or receive a signal.

Optionally, the apparatus 2000 may further include a memory 2030. The memory 2030 communicates with the processor 2010 and the transceiver 2020 through internal connection paths. The memory 2030 is configured to store instructions, and the processor 2010 may execute the instructions stored in the memory 2030.

In a possible implementation, the apparatus 2000 is configured to implement processes and steps corresponding to the first terminal device (for example, the transmitting UE 1) in the foregoing method embodiments.

In another possible implementation, the apparatus 2000 is configured to implement processes and steps corresponding to the second terminal device (for example, the receiving UE 2) in the foregoing method embodiments.

It should be understood that the device 2000 may be specifically a transmit end or a receive end in the foregoing embodiments, or may be a chip or a chip system. Correspondingly, the transceiver 2020 may be a transceiver circuit of the chip. This is not limited herein. Specifically, the device 2000 may be configured to perform steps and/or processes corresponding to the transmit end or the receive end in the foregoing method embodiments.

Optionally, the memory 2030 may include a read-only memory and a random access memory, and provide instructions and data for the processor. A part of the memory may further include a nonvolatile random access memory. For example, the memory may further store information about a device type. The processor 2010 may be configured to execute the instructions stored in the memory. When the processor 2010 executes the instructions stored in the memory, the processor 2010 is configured to perform steps and/or processes in the foregoing method embodiments corresponding to the transmit end or the receive end.

During implementation, the steps of the foregoing methods may be performed by a hardware integrated logic circuit in the processor or by using instructions in a form of software. The steps of the methods disclosed with reference to embodiments of this application may be directly performed by a hardware processor, or may be performed by a combination of hardware and software modules in the processor. The software module may be located in a mature storage medium in the art, for example, a random access memory, a flash memory, a read-only memory, a programmable read-only memory, an electrically erasable programmable memory, or a register. The storage medium is located in a memory, and the processor reads information in the memory and performs the steps of the foregoing methods based on hardware of the processor. To avoid repetition, details are not described herein again.

It should be noted that the processor in embodiments of this application may be an integrated circuit chip and has a signal processing capability. During implementation, the steps in the foregoing method embodiments may be performed by a hardware integrated logic circuit in the processor or by using instructions in a form of software. The processor may be a general-purpose processor, a digital signal processor, an application-specific integrated circuit, a field programmable gate array or another programmable logic device, a discrete gate or transistor logic device, or a discrete hardware component. The processor in embodiments of this application may implement or perform the methods, steps, and logical block diagrams disclosed in embodiments of this application. The general-purpose processor may be a microprocessor, or the processor may be any conventional processor or the like. The steps of the methods disclosed with reference to embodiments of this application may be directly performed by a hardware decoding processor, or may be performed by a combination of hardware and software modules in the decoding processor. The software module may be located in a mature storage medium in the art, for example, a random access memory, a flash memory, a read-only memory, a programmable read-only memory, an electrically erasable programmable memory, or a register. The storage medium is located in a memory, and the processor reads information in the memory and performs the steps of the foregoing methods based on hardware of the processor.

It can be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and serves as an external cache. By way of example but not limitative description, RAMs in many forms may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the systems and methods described in this specification is intended to include but is not limited to these memories and any other appropriate type of memory.

FIG. 13 is a block diagram of a chip system 3000 according to an embodiment of this application. As shown in FIG. 13, the chip system 3000 (which may also be referred to as a processing system) includes a logic circuit 3010 and an input/output interface (input/output interface) 3020.

The logic circuit 3010 may be a processing circuit in the chip system 3000. The logic circuit 3010 may be coupled and connected to a storage unit, and invoke instructions in the storage unit, so that the chip system 3000 can implement the methods and the functions in embodiments of this application. The input/output interface 3020 may be an input/output circuit in the chip system 3000, and outputs information processed by the chip system 3000, or inputs to-be-processed data or signaling information to the chip system 3000 for processing.

In a solution, the chip system 3000 is configured to implement operations performed by a terminal device in the foregoing method embodiments.

For example, the logic circuit 3010 is configured to implement a processing-related operation performed by the first terminal device in the foregoing method embodiments, for example, a processing-related operation performed by the first terminal device in the embodiment shown in FIG. 5; and the input/output interface 3020 is configured to implement a sending-related operation and/or a receiving-related operation performed by the first terminal device in the foregoing method embodiments, for example, a sending-related operation and/or a receiving-related operation performed by the first terminal device in the embodiment shown in FIG. 5.

For another example, the logic circuit 3010 is configured to implement a processing-related operation performed by the second terminal device in the foregoing method embodiments, for example, a processing-related operation performed by the second terminal device in the embodiment shown in FIG. 5; and the input/output interface 3020 is configured to implement a sending-related operation and/or a receiving-related operation performed by the second terminal device in the foregoing method embodiments, for example, a sending-related operation and/or a receiving-related operation performed by the second terminal device in the embodiment shown in FIG. 5.

An embodiment of this application further provides a computer-readable storage medium. The computer-readable storage medium stores computer instructions for implementing a method performed by a terminal device (for example, the first terminal device, or for another example, the second terminal device) in the foregoing method embodiments.

An embodiment of this application further provides a computer program product, including instructions. When the instructions are executed by a computer, a method performed by a terminal device (for example, the first terminal device, or for another example, the second terminal device) in the foregoing method embodiments is implemented.

An embodiment of this application further provides a communication system. The communication system includes the first terminal device and the second terminal device in the foregoing embodiments.

For descriptions and benefits of related content of any one of the apparatuses provided above, refer to a corresponding method embodiment provided above. Details are not described herein again.

A person of ordinary skill in the art may be aware that units and algorithm steps in examples described with reference to embodiments disclosed in this specification can be implemented by electronic hardware or a combination of computer software and electronic hardware. Whether the functions are performed by hardware or software depends on particular applications and design constraints of technical solutions. A person skilled in the art may use different methods to implement the described functions for each particular application, but it should not be considered that the implementation goes beyond the scope of this application.

It can be clearly understood by a person skilled in the art that, for ease and brevity of description, for detailed working processes of the foregoing system, apparatus, and unit, reference may be made to corresponding processes in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the shown or discussed mutual couplings or direct couplings or communication connections may be implemented through some interfaces. The indirect couplings or communication connections between the apparatuses or units may be implemented in electrical, mechanical, or other forms.

The units described as separate components may or may not be physically separate, and components shown as units may or may not be physical units, to be specific, may be located in one place, or may be distributed on a plurality of network units. Some or all of the units may be selected according to actual requirements to achieve objectives of solutions of embodiments.

In addition, functional units in embodiments of this application may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions in this application essentially, or the part contributing to the conventional technology, or some of the technical solutions may be implemented in a form of a software product. The computer software product is stored in a storage medium, and includes several instructions for instructing a computer device (which may be a personal computer, a server, an apparatus, or the like) to perform all or some of the steps of the methods in embodiments of this application. The storage medium includes any medium that can store program code, for example, a USB flash drive, a removable hard disk, a read-only memory, a random access memory, a magnetic disk, or a compact disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A communication method, comprising:

   obtaining, by a first terminal device, first information, wherein the first information indicates an automatic gain control AGC processing capability of a second terminal device;
   determining, by the first terminal device, a first resource based on the first information; and
   sending, by the first terminal device, sidelink information to the second terminal device on the first resource.

2. The method according to claim 1, wherein the obtaining, by a first terminal device, first information comprises:
   receiving, by the first terminal device, the first information from the second terminal device.

3. The method according to claim 1 or 2, wherein the method further comprises:

   sending, by the first terminal device, first indication information to the second terminal device, wherein the first indication information indicates a second resource on which the second terminal device is to perform AGC, and the second resource is determined based on the first information; or
   the first indication information indicates the first resource.

4. The method according to claim 3, wherein the first indication information is carried in a physical sidelink control channel PSCCH or a physical sidelink shared channel PSSCH.

5. The method according to any one of claims 1 to 4, wherein positions/a position of a time domain resource and/or a frequency domain resource used for mapping the PSCCH in each time unit is preconfigured, or positions/a position of a time domain resource and/or a frequency domain resource used for mapping the PSCCH in each time unit is configured by a network device, wherein
   a start position of a time domain resource for the PSCCH is located in a 3rd symbol in a time unit in which the PSCCH is located.

6. The method according to any one of claims 1 to 5, wherein

   the first information comprises a first value, a start position of a time domain resource of the first resource is located in a 2nd symbol in a first time unit, and a time domain resource of the second resource used for the second terminal device to perform AGC is located in a second part of a 1st symbol in the first time unit; or
the first information comprises a second value, the start position of the time domain resource of the first resource is located in a 3rd symbol in the first time unit, and the time domain resource of the second resource is located in the second part of the 1st symbol in the first time unit and the 2nd symbol in the first time unit, wherein
the 1st symbol is located before the 2nd symbol in time domain, and the 2nd symbol is located before the 3rd symbol in time domain.

7. The method according to claim 6, wherein
the 1st symbol in the first time unit comprises a first part and the second part, the first part of the 1st symbol is empty, and the first part of the 1st symbol is located before the second part of the 1st symbol in time domain.

8. The method according to any one of claims 1 to 7, wherein the method further comprises:
receiving, by the first terminal device, first feedback information from the second terminal device on a third resource, wherein the first feedback information is carried in a physical sidelink feedback channel PSFCH, the third resource is determined based on second information, and the second information indicates an AGC processing capability of the first terminal device.

9. The method according to claim 8, wherein

the second information comprises a first value, a time domain resource of the third resource is located in a second-to-last symbol in a second time unit and a last symbol in the second time unit, a time domain resource of a fourth resource is located in a second part of a third-to-last symbol in the second time unit, and the fourth resource is used for the first terminal device to perform AGC; or
the second information comprises a second value, the time domain resource of the third resource is located in the last symbol in the second time unit, and the time domain resource of the fourth resource is located in the second part of the third-to-last symbol in the second time unit and the second-to-last symbol in the second time unit, wherein
the third-to-last symbol in the second time unit comprises a first part and the second part, the first part of the third-to-last symbol is empty, and the second time unit is the same as the first time unit, or the second time unit is located after the first time unit in time domain.

10. The method according to any one of claims 1 to 4, wherein positions/a position of a time-frequency domain resource and/or a frequency domain resource used for mapping the PSCCH in each time unit is preconfigured, or positions/a position of a time domain resource and/or a frequency domain resource used for mapping the PSCCH in each time unit is configured by a network device, wherein
a start position of a time domain resource for the PSCCH is located in a 2nd symbol in a time unit in which the PSCCH is located.

11. The method according to any one of claims 1 to 4 or claim 10, wherein

the first information comprises a first value, a start position of a time domain resource of the first resource is located in a second part of a 1st symbol in a first time unit, and a time domain resource of the second resource used for the second terminal device to perform AGC is located in a first part of the 1st symbol in the first time unit; or
the first information comprises a second value, the start position of the time domain resource of the first resource is located in a 2nd symbol in the first time unit, and the time domain resource of the second resource is located in the 1st symbol in the first time unit, wherein
the 1st symbol is located before the 2nd symbol in time domain, and the first part of the 1st symbol is located before the second part of the 1st symbol in time domain.

12. The method according to claim 11, wherein

an end position of the time domain resource of the first resource is located in a first part of a last symbol in a third time unit, wherein
the last symbol in the third time unit comprises the first part and a second part, the second part of the last symbol is empty, and the third time unit is the same as the first time unit, or the third time unit is located after the first time unit in time domain.

13. The method according to any one of claims 1 to 12, wherein the method further comprises:

receiving, by the first terminal device, second feedback information from the second terminal device on a fifth resource, wherein the second feedback information is used to feed back a receiving status of the sidelink information, wherein

the fifth resource is located in a first time subunit and a second time subunit in a fourth time unit, and a frequency domain position of the fifth resource in the first time subunit is different from a frequency domain position of the fifth resource in the second time subunit.

14. The method according to claim 13, wherein the first time subunit and the second time subunit in the fourth time unit are used to feed back a receiving status of data sent in L time units before the fourth time unit;

the frequency domain position of the fifth resource in the first time subunit satisfies:

$$[(i+j\cdot L)\cdot M_{set},(i+1+j\cdot L)\cdot M_{set}-1];$$

and
the frequency domain position of the fifth resource in the second time subunit satisfies:

$$[(i+j\cdot L+Q)\bmod(N\cdot L)\cdot M_{set},(i+1+j\cdot L+Q)\bmod(N\cdot L))\cdot M_{set}-1],$$

wherein
$M_{set}$ is a quantity of frequency domain subunits in a frequency domain subunit set in which the frequency domain position of the fifth resource in the first time subunit or the second time subunit is located, N is a quantity of frequency domain units in each of the L time units, i is an index, in the L time units, of a time unit in which the sidelink information is located, j is an index, in the N frequency domain units, of a frequency domain unit in which the sidelink information is located, Q is a cyclic shift offset between a frequency domain subunit set in which the frequency domain position of the fifth resource in the first time subunit is located and a frequency domain subunit set in which the frequency domain position of the fifth resource in the second time subunit is located, Q is an integer greater than 0 and less than $N \cdot L$, i is an integer greater than or equal to 0 and less than or equal to L-1, j is an integer greater than or equal to 0 and less than or equal to N-1, and L and N are positive integers.

15. A communication method, comprising:

sending, by a second terminal device, first information to a first terminal device, wherein the first information indicates an automatic gain control AGC processing capability of the second terminal device; and
receiving, by the second terminal device, sidelink information from the first terminal device on a first resource, wherein the first resource is determined based on the first information.

16. The method according to claim 15, wherein the method further comprises:

receiving, by the second terminal device, first indication information from the first terminal device, wherein the first indication information indicates a second resource on which the second terminal device is to perform AGC, and the second resource is determined based on the first information; or
the first indication information indicates the first resource.

17. The method according to claim 16, wherein the first indication information is carried in a PSCCH or a physical sidelink shared channel PSSCH.

18. The method according to any one of claims 15 to 17, wherein a time domain resource and/or a frequency domain resource used for mapping the PSCCH in each time unit are preconfigured, or positions/a position of a time domain resource and/or a frequency domain resource used for mapping the PSCCH in each time unit is configured by a network device, wherein
a start position of a time domain resource for the PSCCH is located in a 3rd symbol in a time unit in which the PSCCH is located.

19. The method according to any one of claims 15 to 18, wherein

the first information comprises a first value, a start position of a time domain resource of the first resource is located in a $2^{nd}$ symbol in a first time unit, and a time domain resource of the second resource used for the second terminal device to perform AGC is located in a second part of a $1^{st}$ symbol in the first time unit; or the first information comprises a second value, the start position of the time domain resource of the first resource is located in a $3^{rd}$ symbol in the first time unit, and the time domain resource of the second resource is located in the second part of the $1^{st}$ symbol in the first time unit and the $2^{nd}$ symbol in the first time unit, wherein the $1^{st}$ symbol is located before the $2^{nd}$ symbol in time domain, and the $2^{nd}$ symbol is located before the $3^{rd}$ symbol in time domain.

20. The method according to claim 19, wherein
the $1^{st}$ symbol in the first time unit comprises a first part and the second part, the first part of the $1^{st}$ symbol is empty, and the first part of the $1^{st}$ symbol is located before the second part of the $1^{st}$ symbol in time domain.

21. The method according to any one of claims 15 to 20, wherein the method further comprises:
sending, by the second terminal device, first feedback information to the first terminal device on a third resource, wherein the first feedback information is carried in a PSFCH, the third resource is determined based on second information, and the second information indicates an AGC processing capability of the first terminal device.

22. The method according to claim 21, wherein

the second information comprises a first value, a time domain resource of the third resource is located in a second-to-last symbol in a second time unit and a last symbol in the second time unit, a time domain resource of a fourth resource is located in a second part of a third-to-last symbol in the second time unit, and the fourth resource is used for the first terminal device to perform AGC; or
the second information comprises a second value, the time domain resource of the third resource is located in the last symbol in the second time unit, and the time domain resource of the fourth resource is located in the second part of the third-to-last symbol in the second time unit and the second-to-last symbol in the second time unit, wherein
the third-to-last symbol in the second time unit comprises a first part and the second part, the first part of the third-to-last symbol is empty, and the second time unit is the same as the first time unit, or the second time unit is located after the first time unit in time domain.

23. The method according to any one of claims 15 to 17, wherein a time domain resource and/or a frequency domain resource occupied for mapping the PSCCH in each time unit are preconfigured, or positions/a position of a time domain resource and/or a frequency domain resource used for mapping the PSCCH in each time unit is configured by a network device, wherein
a start position of a time domain resource for the PSCCH is located in a $2^{nd}$ symbol in a time unit in which the PSCCH is located.

24. The method according to any one of claims 15 to 17 or claim 23, wherein

the first information comprises a first value, a start position of a time domain resource of the first resource is located in a second part of a $1^{st}$ symbol in a first time unit, and a time domain resource of the second resource used for the second terminal device to perform AGC is located in a first part of the $1^{st}$ symbol in the first time unit; or
the first information comprises a second value, the start position of the time domain resource of the first resource is located in a $2^{nd}$ symbol in the first time unit, and the time domain resource of the second resource is located in the $1^{st}$ symbol in the first time unit, wherein
the $1^{st}$ symbol is located before the $2^{nd}$ symbol in time domain, and the first part of the $1^{st}$ symbol is located before the second part of the $1^{st}$ symbol in time domain.

25. The method according to claim 24, wherein

an end position of the time domain resource of the first resource is located in a first part of a last symbol in a third time unit, wherein
the last symbol in the third time unit comprises the first part and a second part, the second part of the last symbol is empty, and the third time unit is the same as the first time unit, or the third time unit is located after the first time unit in time domain.

26. The method according to any one of claims 15 to 25, wherein the method further comprises:

**EP 4 583 615 A1**

sending, by the second terminal device, second feedback information to the first terminal device on a fifth resource, wherein the second feedback information is used to feed back a receiving status of the sidelink information, wherein

the fifth resource is located in a first time subunit and a second time subunit in a fourth time unit, and a frequency domain position of the fifth resource in the first time subunit is different from a frequency domain position of the fifth resource in the second time subunit.

27. The method according to claim 26, wherein the first time subunit and the second time subunit in the fourth time unit are used to feed back a receiving status of data sent in L time units before the fourth time unit;

the frequency domain position of the fifth resource in the first time subunit satisfies:

$$[(i+j\cdot L)\cdot M_{set},(i+1+j\cdot L)\cdot M_{set}-1];$$

and
the frequency domain position of the fifth resource in the second time subunit satisfies:

$$[(i+j\cdot L+Q)\bmod(N\cdot L)\cdot M_{set},(i+1+j\cdot L+Q)\bmod(N\cdot L))\cdot M_{set}-1],$$

wherein
$M_{set}$ is a quantity of frequency domain subunits in a frequency domain subunit set in which the frequency domain position of the fifth resource in the first time subunit or the second time subunit is located, N is a quantity of frequency domain units in each of the L time units, i is an index, in the L time units, of a time unit in which the sidelink information is located, j is an index, in the N frequency domain units, of a frequency domain unit in which the sidelink information is located, Q is a cyclic shift offset between a frequency domain subunit set in which the frequency domain position of the fifth resource in the first time subunit is located and a frequency domain subunit set in which the frequency domain position of the fifth resource in the second time subunit is located, Q is an integer greater than 0 and less than $N\cdot L$, i is an integer greater than or equal to 0 and less than or equal to L-1, j is an integer greater than or equal to 0 and less than or equal to N-1, and L and N are positive integers.

28. A communication apparatus, comprising a module or a unit for performing the method according to any one of claims 1 to 14.

29. A communication apparatus, comprising a module or a unit for performing the method according to any one of claims 15 to 27.

30. A first terminal device, wherein the apparatus comprises a processor, the processor is coupled to a memory, the memory stores instructions, and when the instructions are run by the processor, the processor is enabled to perform the method according to any one of claims 1 to 14.

31. A second terminal device, wherein the apparatus comprises a processor, the processor is coupled to a memory, the memory stores instructions, and when the instructions are run by the processor, the processor is enabled to perform the method according to any one of claims 15 to 27.

32. A communication system, comprising a first terminal device and a second terminal device, wherein

the first terminal device is configured to perform the method according to any one of claims 1 to 14; and
the second terminal device is configured to perform the method according to any one of claims 15 to 27.

33. A computer-readable storage medium, wherein the computer-readable storage medium is configured to store a computer program, and when the computer program is run on a computer, the computer is enabled to perform the method according to any one of claims 1 to 27.

34. A computer program product, wherein the computer program product comprises computer program code, and when the computer program code is run, the method according to any one of claims 1 to 27 is implemented.

(a)

(b)

(c)

(d)

FIG. 1

(a)

(b)

(c)

(d)

FIG. 2

Frequency domain

Time domain

Subchannel 2

Subchannel 1

Subchannel 0

Symbol

(a)

Frequency domain

Time domain

Subchannel 2

Subchannel 1

Subchannel 0

Symbol

(b)

⬚ AGC     ▭ PSCCH     ▨ GP     □ PSSCH     ⊞ PSFCH

FIG. 3

Subchannel 2

Subchannel 1

Subchannel 0

Frequency domain

Mini-slot 1    Mini-slot 2    Symbol

Time domain

(a)

Subchannel 2

Subchannel 1

Subchannel 0

Frequency domain

Mini-slot 1    Mini-slot 2    Symbol

Time domain

(b)

AGC    PSCCH    GP    PSSCH    PSFCH

FIG. 4

EP 4 583 615 A1

37

500

First terminal device

Second terminal device

S510: Obtain first information

S520: Determine a first resource based on the first information

S501: Send first indication information

S502: Determine the first resource (and a second resource) based on the first indication information

S530: Send sidelink information on the first resource

S503: Determine a third resource

S504: Send first feedback information on the third resource

S505: Determine a fifth resource

S506: Send second feedback information on the fifth resource

FIG. 5

Full or partial duplication

| GP+ AGC | AGC or PSSCH | | | | | | | | | | | | | |

PSCCH

▦ PSSCH

(a)

Full or partial duplication                                                                 Partial duplication

| GP+ AGC | AGC or PSSCH | | | | | | | | | GP+ AGC | AGC or PSFCH | PSFCH |

PSCCH

▨ PSSCH

(b)

FIG. 6

FIG. 7

| AGC or AGC+ PSSCH | | PSSCH+ GP |

PSCCH

PSSCH

A 1st symbol is mapped in a comb manner in frequency domain

...

Transformation from frequency domain to time domain

FIG. 8

| AGC or AGC+ PSSCH | PSSCH / PSCCH | PSSCH +GP | AGC | PSFCH | GP |

(a)

| AGC or AGC+ PSSCH | PSSCH / PSCCH | PSSCH +GP | AGC or AGC+ PSFCH | PSFCH | PSFCH +GP |

(b)

| AGC or AGC+ PSSCH | PSSCH / PSCCH | GP+ AGC | PSFCH or AGC+ PSFCH | PSFCH +GP |

(c)

PSSCH ▒

FIG. 9

EP 4 583 615 A1

42

EP 4 583 615 A1

| | | 6 | 12 | | | | | 6 | 12 |
|---|---|---|---|---|---|---|---|---|---|
| PSSCH 9 | PSSCH 10 | 5 | 11 | PSSCH 11 | PSSCH 12 | | | 5 | 11 |
| | | 4 | 10 | | | | | 4 | 10 |
| | | 3 | 9 | | | | | 3 | 9 |
| PSSCH 5 | PSSCH 6 | 2 | 8 | PSSCH 7 | PSSCH 8 | | | 2 | 8 |
| | | 1 | 7 | | | | | 1 | 7 |
| | | 12 | 6 | | | | | 12 | 6 |
| | | 11 | 5 | | | | | 11 | 5 |
| PSSCH 1 | PSSCH 2 | 10 | 4 | PSSCH 3 | PSSCH 4 | | | 10 | 4 |
| | | 9 | 3 | | | | | 9 | 3 |
| | | 8 | 2 | | | | | 8 | 2 |
| | | 7 | 1 | | | | | 7 | 1 |

Symbol 1  Symbol 2

Slot 1    Slot 2    Slot 3    Slot 4    Slot 5    Slot 6

Periodicity of a PSFCH resource=4

| AGC | AGC or PSSCH | PSSCH | | | | | | | | | | GP+ AGC | AGC or PSFCH | PSFCH |
|---|---|---|---|---|---|---|---|---|---|---|---|---|---|---|
| | | PSCCH | | | | | | | | | | | | |

FIG. 10

Communication apparatus 1000

Transceiver unit 1010

Processing unit 1020

FIG. 11

Communication apparatus 2000

Processor
2010

Memory
2030

Transceiver
2020

FIG. 12

Chip system 3000

Logic circuit 3010

Input/Output interface 3020

FIG. 13

## INTERNATIONAL SEARCH REPORT

| International application No. |
| --- |
| **PCT/CN2023/118502** |

| A. | CLASSIFICATION OF SUBJECT MATTER |
| --- | --- |

H04W 72/40(2023.01)i

According to International Patent Classification (IPC) or to both national classification and IPC

| B. | FIELDS SEARCHED |
| --- | --- |

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

3GPP, CJFD, CNTXT, ENTXTC, VEN: 自动增益控制, 占用, 资源配置, 能力, 处理时长, 指示, 符号, 时间单元, 侧链路, 反馈信道, 频域位置, 循环位移, 终端, PSFCH, PSSCH, PSCCH, AGC, automatic gain control, occupancy, resource configuration, capability, processing duration, indication, symbol, time unit, sidelink, feedback channel, frequency domain location, cyclic shift, terminal, SL

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | CN 110830196 A (TELECOMMUNICATIONS TECHNOLOGY RESEARCH INSTITUTE CO., LTD.) 21 February 2020 (2020-02-21) description, paragraphs 4-75 and 106-150 | 1-34 |
| Y | CN 111130732 A (HUAWEI TECHNOLOGIES CO., LTD.) 08 May 2020 (2020-05-08) description, paragraphs 6-30 | 1-34 |
| A | WO 2021072662 A1 (HUAWEI TECHNOLOGIES CO., LTD.) 22 April 2021 (2021-04-22) entire document | 1-34 |
| A | WO 2022111630 A1 (SHARP KABUSHIKI KAISHA et al.) 02 June 2022 (2022-06-02) entire document | 1-34 |
| A | WO 2022027660 A1 (HUAWEI TECHNOLOGIES CO., LTD.) 10 February 2022 (2022-02-10) entire document | 1-34 |

| ✓ Further documents are listed in the continuation of Box C. | ✓ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **16 November 2023** | **22 November 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
|---|
| **PCT/CN2023/118502** |

### C. DOCUMENTS CONSIDERED TO BE RELEVANT

| Category* | Citation of document, with indication, where appropriate, of the relevant passages | Relevant to claim No. |
|---|---|---|
| A | WO 2020239062 A1 (HUAWEI TECHNOLOGIES CO., LTD.) 03 December 2020 (2020-12-03)<br>entire document | 1-34 |

Form PCT/ISA/210 (second sheet) (July 2022)

# EP 4 583 615 A1

## INTERNATIONAL SEARCH REPORT
### Information on patent family members

International application No.

**PCT/CN2023/118502**

| Patent document cited in search report | | | Publication date (day/month/year) | Patent family member(s) | | | Publication date (day/month/year) |
|---|---|---|---|---|---|---|---|
| CN | 110830196 | A | 21 February 2020 | WO | 2020029683 | A1 | 13 February 2020 |
| CN | 111130732 | A | 08 May 2020 | WO | 2020088054 | A1 | 07 May 2020 |
| WO | 2021072662 | A1 | 22 April 2021 | CN | 114365516 | A | 15 April 2022 |
| WO | 2022111630 | A1 | 02 June 2022 | CN | 114641066 | A | 17 June 2022 |
| WO | 2022027660 | A1 | 10 February 2022 | CN | 116261844 | A | 13 June 2023 |
| WO | 2020239062 | A1 | 03 December 2020 | CN | 112019311 | A | 01 December 2020 |

Form PCT/ISA/210 (patent family annex) (July 2022)

**REFERENCES CITED IN THE DESCRIPTION**

**Patent documents cited in the description**

- CN 202211181920

- CN 202211419297